(19) Europäisches Patentamt
European Patent Office
Office européen des brevets

(11) **EP 4 070 343 B1**

(12) **EUROPEAN PATENT SPECIFICATION**

(45) Date of publication and mention
of the grant of the patent:
**06.08.2025 Bulletin 2025/32**

(21) Application number: **20815831.1**

(22) Date of filing: **02.12.2020**

(51) International Patent Classification (IPC):
*H01B 1/24* (2006.01)   *G01L 1/18* (2006.01)
*G01L 1/20* (2006.01)

(52) Cooperative Patent Classification (CPC):
**G01L 1/20; H01B 1/24**

(86) International application number:
**PCT/EP2020/084263**

(87) International publication number:
**WO 2021/110743 (10.06.2021 Gazette 2021/23)**

(54) **SUPRAMOLECULAR CONDUCTIVE POLYMER COMPOSITION**

SUPRAMOLEKULARE LEITFÄHIGE POLYMERZUSAMMENSETZUNG

COMPOSITION POLYMÈRE THERMOCONDUCTIBLE SUPRAMOLÉCULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2019 EP 19212902**

(43) Date of publication of application:
**12.10.2022 Bulletin 2022/41**

(73) Proprietor: **Danmarks Tekniske Universitet
2800 Kongens Lyngby (DK)**

(72) Inventors:
• **DOLATSHABI-PIROUZ, Alireza
2800 Kongens Lyngby (DK)**
• **KADUMUDI, Firoz Babu
2800 Kongens Lyngby (DK)**
• **MEHRALI, Mehdi
2800 Kongens Lyngby (DK)**

(74) Representative: **Høiberg P/S
Adelgade 12
1304 Copenhagen K (DK)**

(56) References cited:
**CN-A- 109 422 835     CN-A- 110 305 339**

## Description

The present disclosure relates to a supramolecular conductive polymer composition with improved properties, such as mechanical, electrical and self-healing, compared to present compositions. The present disclosure further relates to a stress sensor comprising the composition, a stress sensor assembly and a method for sensing stress.

## Background of invention

In recent years, human-like materials have received increasing interest due to their broad applications in robotics, wearable devices, epidermal electronics, implants and cybernetics. Human-like materials are those that can blend perfectly with organs and tissues for a longer period of time without any undesirable outcomes while at the same time retaining their predefined functions and inherent material properties. These materials also need to mimic the complex and curvilinear architecture of the human body, as well as recapitulating some of the mechanical and biological abilities of the target tissue or organ. In this respect, some of the unique aspects of many organs and tissues in the body-including musculoskeletal, skin, cardiac and tooth tissue-are their robustness, flexibility and ability to withstand dynamic forces from day-to-day activities and their ability to quickly remedy biological injuries inflicted upon them. However, for the present human-like materials, there is a strong conflict between the properties of the materials, in that one can only choose a few desired properties, among a list of multiple properties, including a sufficiently high strength, a sufficiently high toughness, self-healing properties while at the same time being non-toxic.

For example, CN110305339A discloses a conductive hydrogel comprising a covalently cross-linked network of modified silk fibroin, and graphene nanoflakes that has been modified in a process involving a phenolic substance, wherein the phenolic substance does not form part of the final hydrogel. The disclosed hydrogel is relatively stiff with a Young's modulus above 100 kPa, and has a low elongation at break of 500%.

## Summary of invention

The invention is defined by the claims. Any subject matter falling outside the scope of the claims is provided for information purposes only. The present inventors have, inspired by the hierarchical organization of materials found in nature, employed a similar scheme based on hydrogen bonding between constituents of a composition in order to achieve human-like compositions with highly sought-after properties. A significant contributing factor to the properties of the compositions disclosed herein relies on the fact that hydrogen bonds are reversible. As a result, compositions which are based on hydrogen bonds may, under specific circumstances, display self-healing properties. The inventors have therefore realized compositions having surprisingly advantageous properties, with respect to compositions of prior. For example, specific embodiments of the present composition display a highly elastic behavior with an excellent Young's modulus, and an unprecedented elongation at break. In fact, certain embodiments of the present disclosure display an elongation at break as high as 20000%, or even higher. In part, the advantageous properties of the present disclosure may be attributed to a high degree of non-covalent interaction, in combination with a low degree, such as an absence, of covalent bonds between the constituents. For example, the composition may, in specific embodiments of the present disclosure, comprise a linear polymer.

The present disclosure therefore relates to a supramolecular conductive polymer composition comprising;

- a linear polymer comprising repeating subunits comprising at least one functional group, for forming a part in a hydrogen bond, selected from alcohol, amine, ether, amide, carboxylic acid, ester, ketone, nitrile, aldehyde and carbamide;
- a polyphenol comprising a minimum of 12 aromatic hydroxyl groups;
- a solvent with a dielectric constant of at least 20; and
- an electrically conductive filler;

wherein the linear polymer is not covalently cross-linked.

The composition has surprisingly shown to display self-healing properties, wherein for example cuts or cracks are able to heal, reforming substantially the original composition. The self-healing properties of the present disclosure may be attributed to reversible crosslinking within the polymeric matrix, which to a significant degree is mediated by the polyphenol. The polyphenol comprises a number of electron acceptor groups and/or electron donor groups such that a reversible network can be formed within the polymeric matrix. It has further been revealed that the reversible crosslinking within the polymeric matrix of the present disclosure has led to further highly sought-after mechanical properties, such as high elasticity.

Furthermore, the composition of the present disclosure has shown to be biocompatible, and therefore may be suitable for being implanted, and may hence function to promote internal wound-healing or sense motion of body parts, including internal organs. The composition may for example be used for sensing the beating of a heart.

In specific embodiments of the present disclosure the composition has shown to possess biodegradable properties. Thereby, an implanted composition may be degraded by time, for example during healing of a surgical wound, such that the composition is degraded following, or at the same time as, wound healing.

The polyphenol may play a significant role in providing the properties of the composition. While the polyphenol may be derived from natural sources, such as wine, oak, tea, grapes, olives and/or oil, such as olive oil, it may further be synthetic or semisynthetic. Extracting polyphenol, such as tannic acid, from natural sources may benefit the composition in that it may result in a more desired composition in terms of for example the biocompatibility and biodegradability of the composition.

Furthermore, the composition has been shown to possess antibacterial properties, which may make it suitable for applications where a decrease of bacterial activity is important, such as in the case of wound healing.

Further, the extraordinary properties of the composition has shown to render the composition highly suitable for use as an electrically active bone-glue for bone mineralization. The composition may be configured such that the electrical conductivity of the composition reduces while the organic bone matrix becomes filled with calcium phosphate nanocrystals which can be used for monitoring the bone mineralization.

Preferably the composition allows for molding, such as by displaying a significant decrease in the shear modulus and/or the Young's modulus at elevated temperatures, allowing for molding to take place. The composition may for example display such a significant change of its mechanical properties, that it is substantially a liquid at the elevated temperatures. In such a state the composition may be molded or printed into any desired shape and/or size.

The use of an electrically conductive filler ensures that the composition is electrically conductive. The composition may as a consequence, in combination with its other advantageous properties, such as high tissue adherence and high elasticity, be used as a stress sensor.

The present disclosure therefore further relates to a stress sensor comprising the composition of the invention. By combining the composition with an electronic test equipment, such as for measuring the resistance of the composition, stretching the composition may result in a measurable resistance change which can be translated into for example a corresponding applied force, a stress and/or an elongation of the composition.

**Description of drawings**

**Fig. 1** shows scanning electron micrographs of the cross-section of (a) control, (b) SiGo-0% and (c) SiGo-10%.

**Fig. 2** shows the stretchability of a composition comprising silk and graphene (SiGo).

**Fig. 3** shows a stress-strain curve of the various SiGo compositions.

**Fig. 4A-B** show curves of the maximum tensile stress and strain of compositions

**Fig. 5A-B** show graphs of the Young's modulus and the compression stress for SiGo compositions.

**Fig. 6** shows cyclic tensile tests of SiGo-0%.

**Fig. 7** shows cyclic tensile tests of SiGo-20%.

**Fig. 8** shows cyclic tensile tests of SiGo-20% sealed within an acrylic foam tape (3M VHB).

**Fig. 9** shows measured water contents of SiGo-0%, SiGo-5%, and SiGo-10% compositions.

**Fig. 10A-B** show the self-healing properties of the SiGo compositions.

**Fig. 11** shows a time-series of micrographs wherein the self-healing can be seen during a time interval of 300 seconds.

**Fig. 12A-B** show the adhesive strength on various surfaces.

**Fig. 13A-C** show photographic images of the moldability, conformability and printability of the composition SiGo-20% respectively.

**Fig. 14A-C** show the rheological measurements (A) Moldability, (B) viscosity and (C) shear thinning of SiGo Compositions.

**Fig. 15A-B** show the resistance changes while breaking and self-healing the circuit.

**Fig. 16A-B** show the relative resistance changes while stretching and bending

**Fig. 17A-C** show the relative resistance change measurements of SiGo-0%, SiGo-5% and SiGo-20% while cyclic stretching up to strain 200%.

**Fig. 18** shows the relative resistance change of a composition attached to various body parts during activation of muscles of that body part.

**Fig. 19** shows FTIR spectra of pristine components and composites.

**Fig. 20** shows an enlarged FTIR spectra of pristine components and composites.

**Fig. 21** shows an enlarged FTIR spectra with secondary structures of a composition comprising 20% rGO and $CaCl_2$.

**Fig. 22** shows distributions of secondary structures for various samples of the composition.

## Detailed description of the invention

The present disclosure relates to a supramolecular conductive polymer composition comprising;

- a linear polymer comprising repeating subunits comprising at least one functional group, for forming a part in a hydrogen bond, selected from alcohol, amine, ether, amide, carboxylic acid, ester, ketone, nitrile, aldehyde and carbamide;
- a polyphenol comprising a minimum of 12 aromatic hydroxyl groups;
- a solvent with a dielectric constant of at least 20; and
- an electrically conductive filler;

wherein the linear polymer is not covalently cross-linked.

The composition preferably comprises a significant degree of supramolecular chemistry and as such, comprises non-covalent interactions. These weak and reversible forces, such as hydrogen bonds, hydrophobic forces, van der Waals forces, and metal-ligand coordination have shown to be a key to understanding biological processes and self-assembling systems, and to constructing complex materials and molecular machinery.

As such, the polymer is able to form hydrogen bonds due to comprising either hydrogen bond acceptor and/or hydrogen bond donors within repeating subunits. The subunits may for example be in the form of amines, such as primary ($RNH_2$), secondary ($R_2NH$) and/or tertiary amines ($R_3N$). Furthermore, the functional group may be in the form of an alcohol ($ROH$) for forming hydrogen bonds. The functional groups are selected from the list including alcohol, amine, ether, amide, carboxylic acid, ester, ketone, nitrile, aldehyde and/or carbamide. The repeating units do not necessarily need to be similar, instead a single polymer may comprise multiple repeating units. Furthermore, different polymer chains may comprise different repeating units and/or have a different number of repeating units.

The composition comprises a solvent for dissolving the constituents of the composition. The solvent are chosen such that the solvent has a dielectric constant ($\varepsilon$) of at least 20, more preferably 30, even more preferably at least 40, even more preferably at least 50, even more preferably at least 60, even more preferably at least 70, most preferably at least 78. As such the solvent shows a significant degree of polarity. The dielectric constant characterizes the solvent in terms of how well the solvent screens electrostatic forces. Solvents with high dielectric constants more effectively screen the attractive or repulsive forces between the ions and the end of dipoles. The partial charges on the polar solvent molecules interact with and diminish the effective charges on solutes and hence diminish the attractive or repulsive forces between charges on solutes.

The composition comprises an electrically conductive filler that is able to improve the electrical properties of the composition, depending on the final application of the composition. For example, if the composition is to be used as a stress sensor, the composition is required to be electrically conductive, preferably having a low resistivity. The electrically conductive filler, may itself comprise or consist of a conductor material, and may be dispersed throughout the composition. The electrically conductive filler may in certain embodiments of the present disclosure comprise entities that affect the electrical properties of other constituents of the composition, such as by reacting with the constituents.

The extraordinary properties of the composition has made it suitable for a wide range of applications. For example the composition, in a specific embodiment of the present disclosure, has been shown to be highly suitable for use as an electrically active bone-glue for bone mineralization. The composition may be configured such that the electrical conductivity of the composition reduces while the organic bone matrix becomes filled with calcium phosphate nanocrystals which can be used for monitoring the bone mineralization.

*Polyphenol*

Although polyphenols are mainly derived from natural sources, they may also be synthetically or semi-synthetically derived. In nature they are largely found in fruits, vegetables, cereals and beverages. Fruits like grapes, apple, pear, cherries and berries comprise up to 200-300 mg polyphenols per 100 grams fresh weight. The products manufactured from these fruits, also comprise polyphenols in significant amounts.

Typically a glass of red wine or a cup of tea or coffee comprises about 100 mg polyphenols. Polyphenols are secondary metabolites of plants and are generally involved in defense against ultraviolet radiation or aggression by pathogens.

More than 8,000 polyphenolic compounds have been identified in various plant species. All plant phenolic compounds arise from a common intermediate, phenylalanine, or a close precursor, shikimic acid. Primarily they occur in conjugated forms, with one or more sugar residues linked to hydroxyl groups, although direct linkages of the sugar (polysaccharide or monosaccharide) to an aromatic carbon also exist. Association with other compounds, like carboxylic and organic acids, amines, lipids and linkage with other phenols is also common. Polyphenols may be classified into different groups as a function of the number of phenol rings that they comprise and on the basis of structural elements that bind these rings to one another. The main classes include phenolic acids, flavonoids, stilbenes and lignans.

The composition may comprise derivatives of phenolic compounds, for example, the rGO may comprise such derivatives. However, it is a strong preference that the composition, in addition to phenolic derivatives bound to rGO also comprises a significant amount of polyphenol, such as at least 10 wt. %, more preferably at least 20 wt. %, yet more preferably at least 30 wt. %. Preferably said additional polyphenol is not bound to rGO. Therefore, in an embodiment of the present disclosure, the composition comprises at least 10 wt. % of, more preferably at least 20 wt. %, yet more preferably at least 30 wt. % of a polyphenol that is not bound to rGO.

In one embodiment of the present disclosure the polyphenol has a molecular weight between 500 and 4000 Da, more preferably between 750 and 3000 Da, more preferably between 1000 and 2500 Da, most preferably between 1500 and 2000 Da. The molecular weight of the polyphenol has a significant impact on the interaction with the other constituents of the composition. The larger molecular weight of the polyphenol, the larger the polyphenol, meaning that it may be able to better crosslink different constituents of the composition, such as different polymer chains. Furthermore, it should be noted that a higher molecular weight, may lead to a smaller absolute number of polyphenols, given the same overall weight ratio between the polyphenol and the other constituents of the composition. An optimal number may therefore be present wherein the number of polyphenols in combination with their size give the most advantageous properties of the composition.

In one embodiment of the present disclosure the polyphenol is selected according to the White-Bate-Smith-Swain-Haslam (WBSSH) definition of a polyphenol. In these embodiments of the present disclosure the polyphenol is therefore a generally moderately water-soluble compound with a molecular weight of 500-4000 Da while it comprises more than 12 phenolic hydroxyl groups and approximately between 5-7 aromatic rings per 1000 Da.

In one embodiment of the present disclosure the polyphenol comprises or consists of between 2 and 40 gallic acid, pyrogallic acid, sinapoyl alcohol, coniferyl alcohol and/or paracoumaryl alcohol moieties.

In one embodiment of the present disclosure the number of moieties is between 2 and 40, more preferably between 5 and 40, yet more preferably between 10 and 40, yet even more preferably between 20 and 40, most preferably between 30 and 40.

In one embodiment of the present disclosure the polyphenol comprises or consists of between 2 and 40 moieties, more preferably between 2 and 30, yet more preferably between 2 and 20, yet even more preferably between 2 and 10, most preferably between 2 and 5.

In one embodiment of the present disclosure the polyphenol comprises or consists of between 2 and 40 moieties, more preferably between 5 and 30, yet more preferably between 10 and 25, yet even more preferably between 12 and 22, most preferably between 15 and 20.

The term moiety preferably describes the larger characteristic parts of the polyphenol molecule, which are made up of atoms that participate in similar chemical reactions, for example hydrogen bonding. The moieties may in itself be composed of yet smaller moieties and functional groups. The moieties may also be used to describe a functional group.

In one embodiment of the present disclosure the number of moieties and/or the type of moieties may differ between the polyphenols of the composition. In another embodiment of the present disclosure the number of moieties and/or the type of moieties of the polyphenols of the composition, are substantially the same.

Aromatic rings (also typically referred to as aromatic compounds or arenes) are hydrocarbons which comprise benzene, or some other related ring structure.

In one embodiment of the present disclosure the number of aromatic rings is between 12 and 16, most preferably between 13 and 15.

In one embodiment of the present disclosure the number of aromatic rings is 12 and 28, most preferably between 13 and 28.

A hydrogen bond may be a primarily electrostatic force of attraction between a hydrogen (H) atom which is covalently bound to a more electronegative atom or group, particularly the second-row elements nitrogen (N), oxygen (O), or fluorine (F), acting as a hydrogen bond donor (Dn), and another electronegative atom bearing a lone pair of electrons, acting as an hydrogen bond acceptor (Ac). There is a general agreement that there may be a minor covalent component to hydrogen bonding, especially for moderate to strong hydrogen bonds (> 5 kcal/mol), although under some instances the importance of covalency in hydrogen bonding has been debated. At the opposite end of the scale, there is typically no clear boundary between a weak hydrogen bond and a van der Waals (e.g., dipole-dipole) interaction.

In order for the polyphenol to have a capability of forming multiple hydrogen bonds with the polymer, the polyphenol should comprise multiple hydrogen bond groups, such as hydrogen bond acceptor groups and/or hydrogen bond donor groups. These groups are suitable for forming hydrogen bonds to other hydrogen bond donor groups and/or hydrogen bond acceptor groups respectively. It should be noted that some groups, such as alcohol groups have the capability of acting as both an acceptor and a donor in a hydrogen bonding. Consequently this group may be considered to be both a hydrogen bond acceptor group and a hydrogen bond donor group, as known to a person skilled in the art.

In one embodiment of the present disclosure the polyphenol consists of or comprises between 1 and 40 hydrogen bond groups, more preferably between 3 and 35, even more preferably between 8 and 30, yet even more preferably between 12 and 25, again yet even more preferably between 15 and 20, most preferably between 16 and 18.

In one embodiment of the present disclosure the polyphenol consists of or comprises between 1 and 40 hydrogen bond groups, more preferably between 1 and 35, even more preferably between 1 and 30, yet even more preferably between 1 and 25, again yet even more preferably between 1 and 20, most preferably between 1 and 18.

In one embodiment of the present disclosure the polyphenol consists of or comprises between 1 and 40 hydrogen bond groups, more preferably between 3 and 40, even more preferably between 8 and 40, yet even more preferably between 12 and 40, again yet even more preferably between 15 and 40, most preferably between 16 and 40.

Hydrogen bonds may be intermolecular or intramolecular. Depending on the nature of the donor and acceptor atoms which constitute the bond, their geometry, and environment, the energy of a hydrogen bond can typically vary between 1 and 40 kcal/mol. As such, they are somewhat stronger than a van der Waals interaction, although this is debated, and weaker than fully covalent or ionic bonds.

In one embodiment of the present disclosure the polyphenol has between 1 and 40 hydrogen bond acceptor groups, preferably between 3 and 35 hydrogen bond acceptor groups, more preferably between 8 and 30 hydrogen bond acceptor groups, even more preferably between 12 and 25 hydrogen bond acceptor groups yet even more preferably between 13 and 21 bond acceptor groups, most preferably between 15 and 18 hydrogen bond acceptor groups.

In one embodiment of the present disclosure the polyphenol has between 1 and 40 hydrogen bond acceptor groups, preferably between 3 and 40 hydrogen bond acceptor groups, more preferably between 8 and 40 hydrogen bond acceptor groups, even more preferably between 12 and 40 hydrogen bond acceptor groups yet even more preferably between 13 and 40 hydrogen bond acceptor groups, most preferably between 15 and 40 hydrogen bond acceptor groups.

In one embodiment of the present disclosure the polyphenol has between 1 and 40 hydrogen bond acceptor groups, preferably between 1 and 35 hydrogen bond acceptor groups, more preferably between 1 and 30 hydrogen bond acceptor groups, even more preferably between 1 and 25 hydrogen bond acceptor groups yet even more preferably between 1 and 21 bond acceptor groups, most preferably between 1 and 18 hydrogen bond acceptor groups.

The acceptor group may consist of or comprise an electronegative atom bearing a lone pair of electrons, for forming a hydrogen bond, such as to a hydrogen atom covalently bond to a hydrogen bond donor, such as an electronegative atom or group, particularly the second-row elements nitrogen (N), oxygen (O), or fluorine (F).

In one embodiment of the present disclosure the polyphenol has between 1 and 40 hydrogen bond donor groups, preferably between 3 and 35 hydrogen bond donor groups, more preferably between 8 and 30 hydrogen bond donor groups, even more preferably between 12 and 25 hydrogen bond donor groups yet even more preferably between 13 and 21 hydrogen bond donor groups, most preferably between 15 and 18 hydrogen bond donor groups.

In one embodiment of the present disclosure the polyphenol has between 1 and 40 hydrogen bond donor groups, preferably between 3 and **40** hydrogen bond donor groups, more preferably between 8 and 40 hydrogen bond donor groups, even more preferably between 12 and 40 hydrogen bond donor groups yet even more preferably between 13 and 40 hydrogen bond donor groups, most preferably between 20 and 40 hydrogen bond donor groups.

In one embodiment of the present disclosure the polyphenol has between 1 and 40 hydrogen bond donor groups, preferably between 1 and 35 hydrogen bond donor groups, more preferably between 1 and 30 hydrogen bond donor groups, even more preferably between 1 and 20 hydrogen bond donor groups yet even more preferably between 1 and 15 bond donor groups, most preferably between 1 and 10 bond donor groups.

The hydrogen bond donor group may consist of or comprise an electronegative atom, particularly the second-row elements nitrogen (N), oxygen (O), or fluorine (F), for forming a covalent bond to a hydrogen atom such that a hydrogen bond may be form to a hydrogen bond acceptor group.

In one embodiment of the present disclosure the polyphenol is tannin. In another embodiment of the present disclosure the polyphenol is tannic acid. In one embodiment of the present disclosure the polyphenol comprises lignin and/or a lignin derivative Tannins are typically widely distributed in higher plants and occur at high levels in various feeds and foods. The presence of tannins has been associated with lower biological availability of various nutrients. Tannins may bind to organic polymers such as polyvinyl polypyrrolidone (PVPP) and polyethylene glycol (PEG). Typically, the binding between a polymer and a polyphenol takes place via hydrogen bonding which increases with, for example, the number of phenolic hydroxyl groups and may further be dependent on their position. Different tannins bind to organic polymers, such as PVPP or PEG to different extents. This may be a consequence of the different number of phenolic hydroxyl groups, to their different positions on the nucleus or to different conformations of these tannins. Binding of tannins to organic polymers may be higher for open and random-coiled tannins. Furthermore, the pH may affect the binding strength, wherein the binding strength may be stronger at moderately low pH, such as between pH 3-4, than at higher, such as pH 7. Therefore, tuning of the binding strength may be possible, such as by the change of pH, and/or other means, for example temperature.

In one embodiment of the present disclosure the polyphenol is extracted from natural sources, such as selected from the list including wine, oak, tea, grapes, olives and/or oil, such as olive oil.

*Polymer*

In one embodiment of the present disclosure the polymer has a molecular weight between 10 and 1500 kDa, such as between 100 and 1200 kDa, such as between 200 and 1000 kDa, such as between 400 and 800 kDa, such as about 500 and 700 kDa.

In a preferred embodiment of the present disclosure the polymer has a molecular weight below 2000 kDa, more preferably below 1500 kDa, even more preferably below 1000 kDa, most preferably below 750 kDa.

The polymer is a linear polymer, wherein the polymer is not a cross-linked polymer, wherein the chains of the polymer are joined together by a number of covalent bonds. A cross-linked polymer typically has a significantly higher molecular weight than a corresponding linear polymer, due to the molecular weight being around the sum of the molecular weight of each polymer chain that forms part in the cross-linked polymer network.

As used herein, a linear polymers refers to a polymer wherein the repeating units are joined together end to end in a single flexible chain. Typically linear polymers are made from monomers with single end group. Linear polymers containing side groups as part of monomer structure do not qualify as branched polymers. Some of the common examples of linear polymers are polyethylene, PVC, polystyrene, and polyamides.

Branched polymers have side chains or branches growing out from the main. The side chains or branches are typically made of the same repeating units as the main polymer chains. The branches result from side reactions during polymerization.

Cross-linked polymers are polymers in which the adjacent polymer chains, the chains or branches, are connected by covalent bonds in a network structure.

In an embodiment of the present disclosure, the composition comprises silk fibroin provided as a linear polymer. Thereby, the composition may comprise a linear chain polymer in the form of silk fibroin, wherein different linear silk fibroin polymer chains are connected only by hydrogen bonding and ionic interactions. In an embodiment of the present disclosure, the composition does not comprise a cross-linked polymer and/or a branched polymer.

In one embodiment of the present disclosure the polymer has a molecular weight between 10 and 1500 kDa, such as between 10 and 1200 kDa, such as between 10 and 1000 kDa, such as between 10 and 800 kDa, such as about 10 and 700 kDa.

In one embodiment of the present disclosure the polymer has a molecular weight between 10 and 1500 kDa, such as between 100 and 1500 kDa, such as between 200 and 1500 kDa, such as between 400 and 1500 kDa, such as about 500 and 1500 kDa.

Molecular weight of the polymer may be chosen such that the composition acquires the desired properties, wherein longer polymer chains may lead to a higher elasticity, but simultaneously a higher Young's modulus. Therefore, the polymer length may be chosen such that the mechanic properties are optimized for the application of the composition.

In one embodiment of the present disclosure the polymer has been subjected to an oxidation treatment, such as by treatment by acid and/or oxygen plasma, for formation of functional groups for forming part in a hydrogen bond. Additional methods, devices and treatments for the oxidations of polymers are known to a person skilled in the art. By the use of these methods/treatments, the polymer does not necessarily have to be provided as a polyphenol, but may instead be subjected to a treatment for formation of polyphenolic substances.

The terms molecular mass, molecular weight, and molar mass may be used interchangeably herein. These terms may be used for the mass of a given molecule measured in unified atomic mass units. The molecular mass may further be used herein to refer to a sample average of any number of polymers.

In one embodiment of the present disclosure the polymer comprises between about 1 and about 7 hydrogen-bond acceptor groups per repeated subunit, such as between 1 and 7, such as between 2 and 6, such as between 3 and 5, such as about 4.

In one embodiment of the present disclosure the polymer comprises between about 1 and about 7 hydrogen-bond acceptor groups per repeated subunit, such as between 1 and 7, such as between 1 and 6, such as between 1 and 5, such as between 1 and 3, such as about 1.

In one embodiment of the present disclosure the polymer comprises between about 1 and about 7 hydrogen-bond acceptor groups per repeated subunit, such as between 1 and 7, such as between 2 and 7, such as between 3 and 7, such as between 4 and 7, such as about 7.

In one embodiment of the present disclosure the polymer comprises between about 1 and about 7 hydrogen-bond donor groups per repeated subunit, such as between 1 and 7, such as between 2 and 6, such as between 3 and 5, such as about 4.

In one embodiment of the present disclosure the polymer comprises between about 1 and about 7 hydrogen-bond donor groups per repeated subunit, such as between 1 and 7, such as between 1 and 6, such as between 1 and 5, such as between 1 and 3, such as about 1.

In one embodiment of the present disclosure the polymer comprises between about 1 and about 7 hydrogen-bond donor groups per repeated subunit, such as between 1 and 7, such as between 2 and 7, such as between 3 and 7, such as between 4 and 7, such as about 7.

In one embodiment of the present disclosure the polymer is a polymer selected from the list including natural silk, synthetic silk, fibroin, such as fibroin heavy chain or fibroin light chain, starch, dextran, chitosan, polyvinyl alcohol, pectin, PEGDA, Polyacrylamide, polyethylene glycol, protein polymers or a mixture thereof. Additionally the polymer is suitable for forming hydrogen bonds, and thus comprises multiple hydrogen bond groups, such as groups comprising at least one hydrogen bond acceptor and/or at least one hydrogen bond donor. Other suitable polymers are known to a person skilled in the art.

In one embodiment of the present disclosure the polymer is a saturated polymer. The polymer may therefore be a saturated polymer, wherein only single bonds between carbon atoms occur, as such, the number of electrons have been saturated. The polymer may as a consequence be less reactive than an unsaturated counterpart.

In another embodiment of the present disclosure the polymer is an unsaturated polymer.

Fibroin is an insoluble protein present in silk, and may be produced by the larvae of Bombyx mori, other moth genera such as Antheraea, Cricula, Samia and Gonometa, and numerous other insects. Silk in its raw state may consist of two main proteins, sericin and fibroin, typically with a glue-like layer of sericin coating two singular filaments of fibroin called brins.

The silkworm typically produces fibroin with three chains, the light, heavy, and the glycoprotein P25. The heavy and light chains are linked by a disulphide bond, and P25 associates with disulphide-linked heavy and light chains by noncovalent interactions. P25 plays an important role in maintaining integrity of the complex.

The heavy fibroin protein consists of layers of antiparallel beta sheets. Its primary structure mainly consists of the recurrent amino acid sequence (Gly-Ser-Gly-Ala-Gly-Ala)$_n$. The high glycine (and, to a lesser extent, alanine) content allows for tight packing of the sheets, which contributes to silk's rigid structure and tensile strength Fibroin is known to arrange itself in three structures, called silk I, II, and III. Silk I is the natural form of fibroin, as emitted from the Bombyx mori silk glands. Silk II refers to the arrangement of fibroin molecules in spun silk, which has greater strength and is often used in various commercial applications. Silk III is a recently discovered structure of fibroin. Silk III is formed principally in solutions of fibroin at an interface (i.e. air-water interface, water-oil interface, etc.).

In one embodiment of the present disclosure the polymer comprises fibroin in β-sheet and/or β-turn formation at between about 10 and 70 % of its total length, such as between 10 and 70 %, such as between 20 and 60%, such as between 30 and 50%, such as about 40%.

In one embodiment of the present disclosure the polymer comprises fibroin in β-sheet and/or β-turn formation at between about 10 and 70 % of its total length, such as between 10 and 70 %, such as between 10 and 60%, such as between 10 and 40%, such as between 10 and 30%, such as between 10 and 20%, such as about 10%.

In one embodiment of the present disclosure the polymer comprises fibroin in β-sheet and/or β-turn formation at between about 10 and 70% of its total length, such as between 10 and 70%, such as between 20 and 70%, such as between 30 and 70%, such as between 40 and 70%, such as between 50 and 70%, such as between 60 and 70%, such as about 70%.

In an embodiment of the present disclosure, the polymer is (silk) fibroin, wherein the polymer is in β-sheet and/or β-turn formation along a total fraction of its total length that is higher, preferably at least 10% higher, more preferably at least 20% higher, yet more preferably at least 30% higher, even more preferably at least 60% higher, most preferably at least 80% higher, than the fraction of the total length of an isolated and/or unmixed (silk) fibroin.

In an embodiment of the present disclosure, the polymer comprises β-sheet and/or β-turn formations along a total fraction of its total length that is at least 20%, more preferably at least 25%, yet more preferably at least 30%, even yet more preferably at least 35%, once more even yet more preferably at least 40%, most preferably at least 50% of the total length of the polymer.

β-structure formation may be a result of the use of a divalent salt, wherein for example Ca$^{2+}$ ions may disrupt hydrophobic interactions and salt bridges between adjacent SF chains via charge shielding and instead facilitating a conformational transition of random coils to more ordered β-structures. Graphene may further increase the percentage of β-structures due through surface facilitated polypeptide chain folding, wherein the interface of a 2D material can induce conformational changes from random coils and α-helices to crystalline β-structures.

Preferably the solvent is able to dissolve at least part of the constituents of the compositions, such as the polymer and/or the polyphenol. Preferably the polarity of the solvent is sufficiently high such that it can dissolve at least part of the constituents of the composition. The solvent may therefore be a polar solvent, such as being defined by the dielectric constant (also commonly referred to as the relative permittivity) of the solvent. Preferably the solvent is selected from any liquid with a dielectric constant (ε) of at least 20, more preferably at least 30, more preferably at least 40, more preferably at least 50, more preferably at least 60, more preferably at least 70, most preferably around 78. The solvent may be chosen by the dielectric constant of that specific solvent at room temperature, such as at around 25 °C, such as at exactly 25 °C. In another embodiment of the present disclosure the solvent is chosen by the dielectric constant of that specific solvent at an elevated temperature such as at 30 °C, such as at 35 °C, such as at 40 °C, such as at 50 °C, such as at 55 °C, such as at 60 °C, such as at 65 °C, such as at 70 °C, such as at 75 °C.

In one embodiment of the present disclosure the solvent is water, such as pure water, distilled water, deionized water, tap water, filtered water.

In an embodiment of the present disclosure, the electrically conductive filler is selected from the list including graphene, intrinsically conducting polymers such as Polyaniline, Polypyrrole, Poly(3,4-ethylenedioxythiophene) and/or polystyrene sulfonate, iron ions, 2D transition metal carbides, carbonitrides, nitrides, MXenes, nanoclays such as bentonite, kaolinite, hectorite, halloysite, and/or montmorillonite, and/or elongated carbon nanostructures, such as carbon nanotubes.

In a further embodiment of the present disclosure the electrically conductive filler is selected from the list including graphene, iron ions, MXenes, nanoclays (bentonite, kaolinite, hectorite, halloysite, and montmorillonite) and/or carbon nanotubes.

Preferably the electrically conductive filler is chosen such that the composition has advantageous electrical properties. The electrically conductive filler may for example give rise to a composition that can act as a stress sensor, wherein the stress exerted on the composition results in a measurable electrical resistance change due to for example the deformation of the composition. As such, the electrical resistance of the composition may be sensitive to the strain exerted on the composition.

The electrically conductive filler is preferably chosen such that the resistivity of the composition is low. The electrically conductive filler may be chosen such that it provides these advantageous electrical properties without resulting in a significant change to the mechanical properties of the composition, as compared to the same composition not having the electrically conductive filler.

In one embodiment of the present disclosure the conductivity of the composition is between $1\times10^{-6}$ and $1\times10^{-1}$ S/cm, such as between $1\times10^{-5}$ and $1\times10^{-2}$ S/cm, such as between $1\times10^{-4}$ and $1\times10^{-3}$ S/cm, such as approximately $5\times10^{-4}$.

In one embodiment of the present disclosure the conductivity of the composition is between $1\times10^{-6}$ and $1\times10^{-1}$ S/cm, such as between $1\times10^{-6}$ and $1\times10^{-2}$ S/cm, such as between $1\times10^{-6}$ and $1\times10^{-3}$ S/cm, such as between $1\times10^{-6}$ and $1\times10^{-4}$ S/cm, such as between $1\times10^{-6}$ and $1\times10^{-6}$ S/cm, such as approximately $5\times10^{-6}$.

In one embodiment of the present disclosure the conductivity of the composition is between $1\times10^{-6}$ and $1\times10^{-1}$ S/cm, such as between $1\times10^{-6}$ and $1\times10^{-1}$ S/cm, such as between $1\times10^{-4}$ and $1\times10^{-1}$ S/cm, such as between $1\times10^{-3}$ and $1\times10^{-1}$ S/cm, such as between $1\times10^{-2}$ and $1\times10^{-1}$ S/cm, such as approximately $5\times10^{-2}$.

*Composition constituents*

The supramolecular conductive polymer composition of the invention comprises:

- a linear polymer comprising repeating subunits comprising at least one functional group, for forming a part in a hydrogen bond, selected from alcohol, amine, ether, amide, carboxylic acid, ester, ketone, nitrile, aldehyde and carbamide;
- a polyphenol comprising a minimum of 12 aromatic hydroxyl groups;
- a solvent with a dielectric constant of at least 20; and
- an electrically conductive filler;

wherein the linear polymer is not covalently cross-linked.

The specific, advantageous and unique properties of the present disclosure are attributed to the constituents of said composition, such as the relative properties of the constituents, and/or the absolute weight percentage of specific constituents of the composition.

Therefore, in one embodiment the present disclosure the composition comprises between 10 and 60 wt.% of the polymer (the composition comprises the polymer at between 10-60 wt.%), such as between 15 and 55 wt.% of the polymer, such as between 20 and 50 wt.% of the polymer, such as between 25 and 45 wt.% of the polymer, such as between 30 and 40 wt.% of the polymer, such as approximately 35 wt.% of the polymer.

In one embodiment of the present disclosure the composition comprises between 10 and 60 wt.% of the polymer, such as between 10 and 55 wt.% of the polymer, such as between 10 and 50 wt.% of the polymer, such as between 10 and 45 wt.% of the polymer, such as between 10 and 40 wt.% of the polymer, such as between 10 and 35 wt.% of the polymer, such as between 10 and 30 wt.% of the polymer, such as between 10 and 25 wt.% of the polymer, such as between 10 and 20 wt.% of the polymer, such as between 10 and 15 wt.% of the polymer, such as approximately 13 wt.% of the polymer.

In one embodiment of the present disclosure the composition comprises between 10 and 60 wt.% of the polymer, such as between 15 and 60 wt.% of the polymer, such as between 20 and 60 wt.% of the polymer, such as between 25 and 60 wt.% of the polymer, such as between 30 and 60 wt.% of the polymer, such as between 35 and 60 wt.% of the polymer, such as between 40 and 60 wt.% of the polymer, such as between 45 and 60 wt.% of the polymer, such as between 50 and 60 wt.% of the polymer, such as approximately 55 wt.% of the polymer.

In one embodiment of the present disclosure the composition comprises between 10 and 70 wt.% of the polyphenol, such as between 15 and 65 wt.% of the polyphenol, such as between 20 and 60 wt.% of the polyphenol, such as between 25 and 55 wt.% of the polyphenol, such as between 30 and 50 wt.% of the polyphenol, such as between 35 and 45 wt.% of the polyphenol, such as approximately 40 wt.% of the polyphenol.

In one embodiment of the present disclosure the composition comprises between 10 and 70 wt.% of the polyphenol, such as between 10 and 65 wt.% of the polyphenol, such as between 10 and 60 wt.% of the polyphenol, such as between 10 and 55 wt.% of the polyphenol, such as between 10 and 50 wt.% of the polyphenol, such as between 10 and 45 wt.% of the polyphenol, such as between 10 and 40 wt.% of the polyphenol, such as between 10 and 35 wt.% of the polyphenol, such as between 10 and 30 wt.% of the polyphenol, such as between 10 and 25 wt.% of the polyphenol, such as between 10 and 20 wt.% of the polyphenol, such as between 10 and 15 wt.% of the polyphenol, such as approximately 13 wt.% of the polyphenol.

In one embodiment of the present disclosure the composition comprises between 10 and 70 wt.% of the polyphenol, such as between 15 and 70 wt.% of the polyphenol, such as between 20 and 70 wt.% of the polyphenol, such as between 25 and 70 wt.% of the polyphenol, such as between 30 and 70 wt.% of the polyphenol, such as between 35 and 70 wt.% of the polyphenol, such as between **40** and 70 wt.% of the polyphenol, such as between 45 and 70 wt.% of the polyphenol, such as between 50 and 70 wt.% of the polyphenol, such as between 55 and 70 wt.% of the polyphenol, such as between 60 and 70 wt.% of the polyphenol, such as between 65 and 70 wt.% of the polyphenol, such as approximately 67 wt.% of the polyphenol.

In one embodiment of the present disclosure the composition comprises between 10 and 90 wt.% of the solvent, such as between 15 and 85 wt.% of the solvent, such as between 20 and 80 wt.% of the solvent, such as between 25 and 75 wt.% of the solvent, such as between 30 and 70 wt.% of the solvent, such as between 35 and 65 wt.% of the solvent, such as between 40 and 60 wt.% of the solvent, such as between 45 and 55 wt.% of the solvent, such as approximately 50 wt.% of the solvent.

In one embodiment of the present disclosure the composition comprises between 10 and 90 wt.% of the solvent, such as between 15 and 90 wt.% of the solvent, such as between 20 and 90 wt.% of the solvent, such as between 25 and 90 wt.% of the solvent, such as between 30 and 90 wt.% of the solvent, such as between 35 and 90 wt.% of the solvent, such as between 40 and 90 wt.% of the solvent, such as between 45 and 90 wt.% of the solvent, such as between 50 and 90 wt.% of the solvent, such as between 55 and 90 wt.% of the solvent, such as between 60 and 90 wt.% of the solvent, such as between 65 and 90 wt.% of the solvent, such as between 70 and 90 wt.% of the solvent, such as between 75 and 90 wt.% of the solvent, such as between 80 and 90 wt.% of the solvent, such as between 85 and 90 wt.% of the solvent, such as approximately 87 wt.% of the solvent.

In one embodiment of the present disclosure the composition comprises between 10 and 90 wt.% of the solvent, such as between 10 and 85 wt.% of the solvent, such as between 10 and 80 wt.% of the solvent, such as between 10 and 75 wt.% of the solvent, such as between 10 and 70 wt.% of the solvent, such as between 10 and 65 wt.% of the solvent, such as between 10 and 60 wt.% of the solvent, such as between 10 and 55 wt.% of the solvent, such as between 10 and 50 wt.% of the solvent, such as between 10 and 45 wt.% of the solvent, such as between 10 and 40 wt.% of the solvent, such as between 10 and 35 wt.% of the solvent, such as between 10 and 30 wt.% of the solvent, such as between 10 and 25 wt.% of the solvent, such as between 10 and 20 wt.% of the solvent, such as between 10 and 15 wt.% of the solvent, such as approximately 13 wt.% of the solvent.

In one embodiment of the present disclosure the composition comprises approximately between 0 and 40 wt.% of the conductive filler, such as between 5 and 35 wt.% of the conductive filler, such as between 10 and 30 wt.% of the conductive filler, such as between 15 and 25 wt.% of the conductive filler, such as approximately 20 wt.% of the conductive filler.

In one embodiment of the present disclosure the composition comprises approximately between 0 and 40 wt.% of the conductive filler, such as between 0 and 35 wt.% of the conductive filler, such as between 0 and 30 wt.% of the conductive filler, such as between 0 and 25 wt.% of the conductive filler, such as between 0 and 20 wt.% of the conductive filler, such as between 0 and 15 wt.% of the conductive filler, such as between 0 and 10 wt.% of the conductive filler, such as between 0 and 5 wt.% of the conductive filler.

In one embodiment of the present disclosure the composition comprises approximately between 0 and 40 wt.% of the conductive filler, such as between 5 and 40 wt.% of the conductive filler, such as between 10 and 40 wt.% of the conductive filler, such as between 15 and 40 wt.% of the conductive filler, such as between 20 and 40 wt.% of the conductive filler, such as between 25 and 40 wt.% of the conductive filler, such as between 30 and 40 wt.% of the conductive filler, such as between 35 and 40 wt.% of the conductive filler.

In one embodiment of the present disclosure the weight ratios between the polymer, the polyphenol, the solvent and the conductive filler are within the intervals 10-60:10-90:10-90:0.1-30 respectively, such as within the intervals 20-50:20-80:20-80:5-20 respectively, such as within the intervals 30-40:30-70:30-70:10-20 respectively. An overview of preferable relative weight ratio ranges of the constituents of the composition without salt are given in Table 1. It is a preference that the numbers are selected such that the total sum equals 100. An overview of preferable relative weight ratio ranges of the constituents of the formulation without salt are given in Table 1A.. However, in a preferred embodiment of the present disclosure, the constituents of the formulation without salt are given in Table 1B, please note that the values in this table do not include the solvent content.

Table 1A. composition constituents, given as the relative weight ratio between the constituents on the composition, for a composition without salt.

| Constituent | Interval 1 | Interval 2 | Interval 3 | Interval 4 | Interval 5 | Interval 6 |
|---|---|---|---|---|---|---|
| Polymer | 10-60 | 20-50 | 25-40 | 25-40 | 25-40 | 30-40 |
| Polyphenol | 10-90 | 20-80 | 30-70 | 40-70 | 40-70 | 45-65 |
| Solvent | 10-90 | 20-80 | 30-70 | 40-70 | 40-70 | 45-65 |
| Conductive filler | 0.1-30 | 5-30 | 5-30 | 10-30 | 15-30 | 20-30 |

Table 1B. composition constituents, given as the relative weight ratio between the constituents on the composition, for a composition without salt.

| Constituent | Interval 1 | Interval 2 | Interval 3 | Interval 4 | Interval 5 | Interval 6 |
|---|---|---|---|---|---|---|
| Polymer | 10-60 | 20-50 | 25-40 | 25-40 | 25-40 | 30-40 |
| Polyphenol | 10-90 | 20-80 | 30-70 | 40-70 | 40-70 | 45-65 |
| Conductive filler | 0.1-30 | 5-30 | 5-30 | 10-30 | 15-30 | 20-30 |

*Composition with Salt*

In one embodiment of the present disclosure the composition comprises a salt, such as calcium chloride, magnesium chloride and/or lithium chloride. In a preferred embodiment of the present disclosure, the salt comprises or consists of a divalent salt, such as $CaCl_2$ or $MgCl_2$. Preferably the salt is selected such that it affects the interaction between the constituents of the composition, such as the bonding between the constituents, such as the bonding between the polymer and the polyphenol. The salt may be used to tune the interaction, such as the bond strength, and the resulting mechanical properties, in order to achieve a composition with advantageous properties. In one embodiment of the present disclosure the salt is chosen (i.e. the type of salt and/or the amount of the salt) such that it decreases the resistivity of the composition to a significant degree, for stress sensing. In another embodiment of the present disclosure the salt is chosen such that the main contribution is its modification of the mechanical properties of the composition. In one embodiment of the present disclosure the salt acts to screen charges of various constituents of the sample. In a specific embodiment of the present disclosure, the composition comprises salt, in an amount of salt and/or a type of salt, selected such that it facilitates a conformational transition of random coils of the polymer (e.g. silk fibroin) to more ordered β-structures. β-structures herein includes β-sheets and β-turn structures.

In one embodiment of the present disclosure the composition comprises approximately between 0 and 20 wt.% of the salt, such as between 2 and 16 wt.% of the salt, such as between 5 and 12 wt.% of the salt, such as between 8 and 10 wt.% of the salt.

In one embodiment of the present disclosure the composition comprises approximately between 0 and 20 wt.% of the salt, such as between 0 and 16 wt.% of the salt, such as between 0 and 12 wt.% of the salt, such as between 0 and 10 wt.% of the salt, such as between 0 and 7 wt.% of the salt, such as between 0 and 4 wt.% of the salt, such as approximately 2 wt.% of the salt.

In one embodiment of the present disclosure the composition comprises approximately between 0 and 20 wt.% of the salt, such as between 3 and 20 wt.% of the salt, such as between 7 and 20 wt.% of the salt, such as between 11 and 20 wt.% of the salt, such as between 14 and 20 wt.% of the salt, such as between 17 and 20 wt.% of the salt, such as approximately 18 wt.% of the salt.

Table 2A. Composition constituents, given as the relative weight ratio between the constituents of the composition, composition comprising salt.

| Constituent | Interval 1 | Interval 2 | Interval 3 | Interval 4 | Interval 5 | Interval 6 |
|---|---|---|---|---|---|---|
| Polymer | 10-60 | 15-60 | 15-55 | 20-55 | 25-55 | 30-50 |

(continued)

| Table 2A. Composition constituents, given as the relative weight ratio between the constituents of the composition, composition comprising salt. | | | | | | |
|---|---|---|---|---|---|---|
| Constituent | Interval 1 | Interval 2 | Interval 3 | Interval 4 | Interval 5 | Interval 6 |
| Polyphenol | 10-90 | 20-80 | 25-75 | 30-75 | 35-75 | 30-50 |
| Solvent | 10-90 | 20-80 | 25-75 | 30-75 | 35-75 | 30-60 |
| Conductive filler | 0.1-30 | 0.1-25 | 5-25 | 10-25 | 10-25 | 10-20 |
| Salt | 0-20 | 0.1-20 | 5-20 | 10-20 | 10-20 | 10-15 |

In one embodiment of the present disclosure the weight ratios between the polymer, the polyphenol, the solvent, the conductive filler and the salt are within the intervals 10-60:10-70:20-90:0-30:0-20 respectively, such as within the intervals 20-50:20-60:30-80:5-20:5-15 respectively, such as within the intervals 30-40:30-50:40-70:10-20:9-14 respectively. An overview of preferable relative weight ratio ranges of the constituents of the composition comprising salt are given in Table 2A.

In a preferred embodiment of the present disclosure, the weight ratios between the polymer, the polyphenol, the conductive filler and the salt are within the intervals 10-40:25-75:3-15:10-20 respectively. In a further embodiment of the present disclosure, the weight percentages of the polymer, the polyphenol, the conductive filler and the salt are within the intervals 10-40:25-75:3-15:10-20 respectively, wherein the amount of the different constituents are selected such that they add up to 100 wt.%. An overview of preferable relative weight ratio ranges of the constituents of the composition comprising salt are given in Table 2B.

| Table 2B. Composition constituents, given as the relative weight ratio between the constituents of the composition comprising salt. | | | | | | |
|---|---|---|---|---|---|---|
| Constituent | Interval 1 | Interval 2 | Interval 3 | Interval 4 | Interval 5 | Interval 6 |
| Polymer | 10-60 | 10-50 | 10-40 | 20-40 | 25-40 | 30-40 |
| Polyphenol | 10-90 | 20-80 | 25-75 | 30-75 | 35-75 | 30-50 |
| Conductive filler | 0.1-30 | 0.1-25 | 3-15 | 10-25 | 10-25 | 10-20 |
| Salt | 0-20 | 0.1-20 | 10-20 | 10-20 | 10-20 | 10-15 |

*Formulation constituents*

Preferably the supramolecular conductive polymer composition comprises a polymer, a polyphenol, a solvent and an electrically conductive filler. The specific, advantageous and unique properties of the present disclosure is attributed to the constituents of said composition, such as the relative properties of the constituents, and/or the absolute weight percentage of specific constituents of the composition. Said composition is preferably formed from a formulation, wherein the formulation comprises, or consists of, formulation constituents. The formulation constituents may be used in any process known to a person skilled in the art for the formation of the supramolecular conductive polymer composition of the present disclosure. For example, the formulation may be mixed at a specific temperature, such as room temperature and/or at elevated temperatures. Additionally or alternatively, the formulation may comprise formation components, such as catalysts or reactants for formation of said composition, as known to a person skilled in the art. In one embodiment of the present disclosure the catalysts are removed following formation of said composition and do not form part of said composition.

In one embodiment of the present disclosure the formulation comprises between 10 and 60 wt.% of the polymer, such as between 15 and 55 wt.% of the polymer, such as between 20 and 50 wt.% of the polymer, such as between 25 and 45 wt.% of the polymer, such as between 30 and 40 wt.% of the polymer, such as approximately 35 wt.% of the polymer.

In one embodiment of the present disclosure the formulation comprises between 10 and 60 wt.% of the polymer, such as between 10 and 55 wt.% of the polymer, such as between 10 and 50 wt.% of the polymer, such as between 10 and 45 wt.% of the polymer, such as between 10 and 40 wt.% of the polymer, such as between 10 and 35 wt.% of the polymer, such as between 10 and 30 wt.% of the polymer, such as between 10 and 25 wt.% of the polymer, such as between 10 and 20 wt.% of the polymer, such as between 10 and 15 wt.% of the polymer, such as approximately 13 wt.% of the polymer.

In one embodiment of the present disclosure the formulation comprises between 10 and 60 wt.% of the polymer, such as between 15 and 60 wt.% of the polymer, such as between 20 and 60 wt.% of the polymer, such as between 25 and 60 wt.% of the polymer, such as between 30 and 60 wt.% of the polymer, such as between 35 and 60 wt.% of the polymer, such as between 40 and 60 wt.% of the polymer, such as between 45 and 60 wt.% of the polymer, such as between 50 and 60 wt.% of the polymer, such as approximately 55 wt.% of the polymer.

In one embodiment of the present disclosure the formulation comprises between 10 and 70 wt.% of the polyphenol, such as between 15 and 65 wt.% of the polyphenol, such as between 20 and 60 wt.% of the polyphenol, such as between 25 and 55 wt.% of the polyphenol, such as between 30 and 50 wt.% of the polyphenol, such as between 35 and 45 wt.% of the polyphenol, such as approximately 40 wt.% of the polyphenol.

In one embodiment of the present disclosure the formulation comprises between 10 and 70 wt.% of the polyphenol, such as between 10 and 65 wt.% of the polyphenol, such as between 10 and 60 wt.% of the polyphenol, such as between 10 and 55 wt.% of the polyphenol, such as between 10 and 50 wt.% of the polyphenol, such as between 10 and 45 wt.% of the polyphenol, such as between 10 and 40 wt.% of the polyphenol, such as between 10 and 35 wt.% of the polyphenol, such as between 10 and 30 wt.% of the polyphenol, such as between 10 and 25 wt.% of the polyphenol, such as between 10 and 20 wt.% of the polyphenol, such as between 10 and 15 wt.% of the polyphenol, such as approximately 13 wt.% of the polyphenol.

In one embodiment of the present disclosure the formulation comprises between 10 and 70 wt.% of the polyphenol, such as between 15 and 70 wt.% of the polyphenol, such as between 20 and 70 wt.% of the polyphenol, such as between 25 and 70 wt.% of the polyphenol, such as between 30 and 70 wt.% of the polyphenol, such as between 35 and 70 wt.% of the polyphenol, such as between 40 and 70 wt.% of the polyphenol, such as between 45 and 70 wt.% of the polyphenol, such as between 50 and 70 wt.% of the polyphenol, such as between 55 and 70 wt.% of the polyphenol, such as between 60 and 70 wt.% of the polyphenol, such as between 65 and 70 wt.% of the polyphenol, such as approximately 67 wt.% of the polyphenol.

In one embodiment of the present disclosure the formulation comprises between 10 and 90 wt.% of the solvent, such as between 15 and 85 wt.% of the solvent, such as between 20 and 80 wt.% of the solvent, such as between 25 and 75 wt.% of the solvent, such as between 30 and 70 wt.% of the solvent, such as between 35 and 65 wt.% of the solvent, such as between 40 and 60 wt.% of the solvent, such as between 45 and 55 wt.% of the solvent, such as approximately 50 wt.% of the solvent.

In one embodiment of the present disclosure the formulation comprises between 10 and 90 wt.% of the solvent, such as between 15 and 90 wt.% of the solvent, such as between 20 and 90 wt.% of the solvent, such as between 25 and 90 wt.% of the solvent, such as between 30 and 90 wt.% of the solvent, such as between 35 and 90 wt.% of the solvent, such as between 40 and 90 wt.% of the solvent, such as between 45 and 90 wt.% of the solvent, such as between 50 and 90 wt.% of the solvent, such as between 55 and 90 wt.% of the solvent, such as between 60 and 90 wt.% of the solvent, such as between 65 and 90 wt.% of the solvent, such as between 70 and 90 wt.% of the solvent, such as between 75 and 90 wt.% of the solvent, such as between 80 and 90 wt.% of the solvent, such as between 85 and 90 wt.% of the solvent, such as approximately 87 wt.% of the solvent.

In one embodiment of the present disclosure the formulation comprises between 10 and 90 wt.% of the solvent, such as between 10 and 85 wt.% of the solvent, such as between 10 and 80 wt.% of the solvent, such as between 10 and 75 wt.% of the solvent, such as between 10 and 70 wt.% of the solvent, such as between 10 and 65 wt.% of the solvent, such as between 10 and 60 wt.% of the solvent, such as between 10 and 55 wt.% of the solvent, such as between 10 and 50 wt.% of the solvent, such as between 10 and 45 wt.% of the solvent, such as between 10 and 40 wt.% of the solvent, such as between 10 and 35 wt.% of the solvent, such as between 10 and 30 wt.% of the solvent, such as between 10 and 25 wt.% of the solvent, such as between 10 and 20 wt.% of the solvent, such as between 10 and 15 wt.% of the solvent, such as approximately 13 wt.% of the solvent.

In one embodiment of the present disclosure the formulation comprises approximately between 0 and 40 wt.% of the conductive filler, such as between 5 and 35 wt.% of the conductive filler, such as between 10 and 30 wt.% of the conductive filler, such as between 15 and 25 wt.% of the conductive filler, such as approximately 20 wt.% of the conductive filler.

In one embodiment of the present disclosure the formulation comprises approximately between 0 and 40 wt.% of the conductive filler, such as between 0 and 35 wt.% of the conductive filler, such as between 0 and 30 wt.% of the conductive filler, such as between 0 and 25 wt.% of the conductive filler, such as between 0 and 20 wt.% of the conductive filler, such as between 0 and 15 wt.% of the conductive filler, such as between 0 and 10 wt.% of the conductive filler, such as between 0 and 5 wt.% of the conductive filler.

In one embodiment of the present disclosure the formulation comprises approximately between 0 and 40 wt.% of the conductive filler, such as between 5 and 40 wt.% of the conductive filler, such as between 10 and 40 wt.% of the conductive filler, such as between 15 and 40 wt.% of the conductive filler, such as between 20 and 40 wt.% of the conductive filler, such as between 25 and 40 wt.% of the conductive filler, such as between 30 and 40 wt.% of the conductive filler, such as between 35 and 40 wt.% of the conductive filler.

In one embodiment of the present disclosure the weight ratios between the polymer, the polyphenol, the solvent and the conductive filler are within the intervals 10-60:10-90:10-90:0.1-30 respectively, such as within the intervals 20-50:20-80:20-80:5-20 respectively, such as within the intervals 30-40:45-65:45-65:20-30 respectively. An overview of preferable relative weight ratio ranges of the constituents of the formulation without salt are given in Table 1A.. However, in a preferred embodiment of the present disclosure, the constituents of the formulation without salt are given in Table 1B, please note that the values in this table do not include the solvent content.

*Formulation with Salt*

In one embodiment of the present disclosure the formulation comprises a salt, such as calcium chloride, magnesium chloride and/or lithium chloride. Preferably the salt affects the interaction between the constituents of the composition, such as the bonding between the constituents, such as the bonding between the polymer and the polyphenol. The relative amount of salt may be used for tuning the interactions between constituents of the final composition, such as the bond strength, and the resulting mechanical properties, in order to form a composition having the desired unique and advantageous properties. In one embodiment of the present disclosure the salt is chosen such that it decreases the resistivity of the composition to a significant degree, for stress sensing. In another embodiment of the present disclosure the salt is chosen such that the main contribution is its modification of the mechanical properties of the composition. In one embodiment of the present disclosure the salt acts to screen charges of various constituents of the sample.

In one embodiment of the present disclosure the composition comprises approximately between 0 and 20 wt.% of the salt, such as between 2 and 16 wt.% of the salt, such as between 5 and 12 wt.% of the salt, such as between 8 and 10 wt.% of the salt.

In one embodiment of the present disclosure the composition comprises approximately between 0 and 20 wt.% of the salt, such as between 0 and 16 wt.% of the salt, such as between 0 and 12 wt.% of the salt, such as between 0 and 10 wt.% of the salt, such as between 0 and 7 wt.% of the salt, such as between 0 and 4 wt.% of the salt, such as approximately 2 wt.% of the salt.

In one embodiment of the present disclosure the composition comprises approximately between 0 and 20 wt.% of the salt, such as between 3 and 20 wt.% of the salt, such as between 7 and 20 wt.% of the salt, such as between 11 and 20 wt.% of the salt, such as between 14 and 20 wt.% of the salt, such as between 17 and 20 wt.% of the salt, such as approximately 18 wt.% of the salt.

In one embodiment of the present disclosure the weight ratios between the polymer, the polyphenol, the solvent, the conductive filler and the salt are within the intervals 10-60:10-70:20-90:0-30:0-20 respectively, such as within the intervals 20-50:20-60:30-80:5-20:5-15 respectively, such as within the intervals 30-40:30-50:40-70:10-20:9-14 respectively. An overview of relative weight ratio ranges according to a specific embodiment of the present disclosure, of the constituents of the formulation comprising salt are given in Table 2A. However, in a preferred embodiment of the present disclosure, the constituents of the formulation comprising salt are given in Table 2B, please note that the values in this table do not include the solvent content.

*Self-healing*

A general polymer may be divided into two parts by yielding to mechanical stress through cleavage of sigma bonds. The factors that determine how a polymer will yield include the type of stress, the chemical properties inherent to the polymer, the level and type of solvation, and the temperature. From a macromolecular perspective, stress induced damage at the molecular level leads to larger scale damage called microcracks. A microcrack is formed where neighboring polymer chains have been damaged in close proximity, ultimately leading to weakening of the fiber as a whole which may render the polymer unusable.

Surprisingly, the composition of the present disclosure has shown to possess self-healing properties, wherein the damages to the composition, such as cracks or cleavages, may be repaired, such as by autonomic healing of the composition. This property is something the composition of the present disclosure shares with for example supramolecular polymers, which is a group of polymers that are composed of monomers that interact non-covalently. Common interactions between the parts forming such a composition include hydrogen bonds, metal coordination, and van der Waals forces. Mechanical stress in supramolecular polymers causes the disruption of these specific non-covalent interactions, leading to monomer separation and polymer breakdown. Polymers may include autonomic healing supramolecular networks as well as temperature triggered supramolecular networks, such as wherein healing is promoted by the addition of heat. The composition of the present disclosure may therefore in specific aspects have similarities to a supramolecular polymer.

In one embodiment of the present disclosure the composition is able to counteract rupture and/or fracture introduced by mechanical stress by, when reconnecting the surfaces of the rupture and/or fracture. The composition may accomplish this by reforming hydrogen bonds between parts otherwise broken by for example mechanical stress. As a result, a single unit can be formed having substantially the same mechanical and electrical properties as the composition prior to the rupture and/or fracture.

In one embodiment of the present disclosure the composition is self-healable with a healing efficiency, in terms of electrical and/or mechanical properties, of at least 40%, such as at least 50%, such as at least 60%, such as at least 70%, such as at least 80%, such as at least 90%, such as substantially 100%. Preferably, the composition is able to self-heal within a short amount of time, such as less than 10 minutes, such as less than 5 minutes, such as less than 3 minutes, such as less than 2 minutes such as less than 1 minute.

Self-healing efficiency is herein defined as the ratio of a recovered property value to its original value (the percent recovery of a virgin material property).

In one embodiment of the present disclosure the composition is therefore able to self-heal its electrical properties, such that an elongated structure having a certain resistance between its endpoints, substantially depending on the shape and the resistivity of the composition, may be cut perpendicular to its axial length, such that there is no electrical contact between its original two endpoints. Upon re-contacting the surfaces of the cut, the composition may be self-healed wherein the resistance is restored to a significant degree. The same mechanism for self-healing may hold true for restoring the mechanical properties of the composition.

The healing efficiency may be based on the electrical properties, such as the resistance, the mechanical properties, such as the fracture toughness, the tensile strength, the compressive strength, the impact strength, the tear strength, the flexural strength, the strain energy, the Young's modulus, across the boundary of a previous cut of the composition.

*Bioproperties*

In one embodiment of the present disclosure the composition is biocompatible. The constituents of the composition are thereby selected such that they may be used in order to form a biocompatible composition. Biocompatibility may refer to the quality of not having toxic or injurious effects on biological systems. In specific embodiments of the present disclosure, biocompatibility is instead referred to as the ability of a material to perform with an appropriate host response in a specific application.

Naturally derived polymers in general offer several advantages compared to synthetic polymers, namely biocompatibility, biodegradability, and biological activity, as most of them are present in the structural tissues of living organisms. However, they typically display low mechanical strength and high rates of degradation.

In one embodiment of the present disclosure the composition possesses antibacterial properties. This may be a result of the incorporation of substances into the composition which have known antibacterial properties, such as tannins. Antibacterial properties may be a result of, for example, inhibition of extracellular microbial enzymes, deprivation of the substrates required for microbial growth, direct action on microbial metabolism through inhibition of oxidative phosphorylation or iron deprivation.

*Mechanical properties*

The composition of the present disclosure unexpectedly possesses several highly sought after advantageous mechanical properties. For example the composition may be surprisingly stretchable before rupture, i.e. the composition has a high elongation at break. Therefore, in one embodiment of the present disclosure the composition is stretchable to a length of at least 5 times the original length before rupture, more preferably at least 10 times the original length before rupture, yet more preferably at least 20 times the original length before rupture, yet even more preferably at least 30 times the original length before rupture, once even more preferably at least **40** times the original length before rupture, such as at least 50 times the original length before rupture, such as at least 60 times the original length before rupture, such as at least 70 times the original length before rupture, such as at least 80 times the original length before rupture, such as at least 80 times the original length before rupture, such as at least 90 times the original length before rupture, more preferably at least 100 times the original length before rupture, most preferably at least 200 times the original length before rupture. As such the composition may display a ductile behavior and/or strain softening under uniaxial tensile loading.

In one embodiment of the present disclosure the composition can tolerate to be stretched of up to 50%, preferably up to 75%, more preferably up to 100%, more preferably up to 125%, more preferably up to 150%, more preferably up to 200%, more preferably up to 300%, more preferably up to 400%, more preferably up to 500% of its original length by having a net resulting resistance change following the cycles, such as when the tensile force is released, of less than 10%.

In one embodiment of the present disclosure the composition can tolerate 2 stretch cycles of up to 50%, preferably up to 75%, more preferably up to 100%, more preferably up to 125%, more preferably up to 150%, more preferably up to 200%, more preferably up to 300%, more preferably up to 400%, more preferably up to 500% of its original length by having a net resulting resistance change following the cycles, such as when the tensile force is released, of less than 10%.

In one embodiment of the present disclosure the composition can tolerate 3 stretch cycles of up to 50%, preferably up to 75%, more preferably up to 100%, more preferably up to 125%, more preferably up to 150%, more preferably up to 200%, more preferably up to 300%, more preferably up to 400%, more preferably up to 500% of its original length by having a net resulting resistance change following the cycles, such as when the tensile force is released, of less than 10%.

In one embodiment of the present disclosure the composition can tolerate 4 stretch cycles of up to 50%, preferably up to 75%, more preferably up to 100%, more preferably up to 125%, more preferably up to 150%, more preferably up to 200%, more preferably up to 300%, more preferably up to 400%, more preferably up to 500% of its original length by having a net resulting resistance change following the cycles, such as when the tensile force is released, of less than 10%.

In one embodiment of the present disclosure the composition displays non-Newtonian behavior. Non-Newtonian behavior may be shear thinning, which is the behavior of fluids whose viscosity decreases under shear strain. It is sometimes considered synonymous for pseudoplastic behavior. The non-Newtonian behavior may additionally or alternatively be due to time-dependent effects, such as thixotropy.

In one embodiment of the present disclosure the Young's modulus, at 22 °C, is between 1 and 40 kPa, more preferably between 1 and 30 kPa, such as between 5 and 25 kPa, such as between 8 and 23 kPa, such as between 12 and 20 kPa, such as between 15 and 22 kPa, such as between 17 and 20 kPa. A high elasticity/flexibility (i.e. a low Young's modulus) offers significant benefits for certain applications. For example the composition may be deformed to a greater extent, with the same force applied, thereby allowing for more sensitive stress sensors. As a lower force is required in order to deform a higher elastic composition, an individual may use the composition as a stress sensor without noticing the presence of the sensor. It is a strong preference that the Young's modulus is relatively low. Therefore in an embodiment of the present disclosure, the Young's modulus is below 50 kPa, more preferably below 45 kPa, yet more preferably below 40 kPa, even more preferably below 35 kPa, yet even more preferably below 30 kPa, most preferably below 25 kPa, such as at room temperature (22 °C).

Young's modulus, or Young modulus, is a mechanical property that measures the stiffness of a solid material. It defines the relationship between stress (force per unit area) and strain (proportional deformation) in a material in the linear elasticity regime of a uniaxial deformation.

In one embodiment of the present disclosure the composition is attached to a support layer, wherein the support layer provides a higher yield strength than the composition. In this way, deformation to the composition is to a significant degree limited to elastic deformation at the relevant strain ranges, while the plastic deformation can be minimized, and preferably avoided, at the relevant strain ranges. The support layer may comprise or consist of a tape.

*Printability*

In one embodiment of the present disclosure the shear modulus at 40 °C is at least 2 times lower than the shear modulus at 20 °C. More preferably at least 5 times lower, even more preferably at least 10 times lower, even more preferably at least 15 times lower, even more preferably at least 20 times lower, even more preferably at least 40 times lower, even more preferably at least 100 times lower, even more preferably at least 200 times lower.

This means that the composition is moldable. The composition may as such behave as a typical liquid at elevated temperatures. The composition may therefore have a temperature dependent shear modulus, wherein it significantly decreases upon application of heat, sufficient for successful molding of the composition to take place. The composition may for example be molded into substantially layered products, such as for application on a skin for registering movements and/or a stress sensor. The composition may further be molded into shapes such that the shaped composition matches the surface to which the composition is to be applied to, such as being curved for wherein the composition is to be applied to a heart.

In one embodiment of the present disclosure the composition can be extruded, such that it is suitable to be printed. Extrusion of the composition may be a result of an elevated temperature wherein the shear modulus has temporarily been decreased due to the application of heat. Printing may therefore be performed to print the composition in predefined patterns, in a single layer or in a three-dimensional configuration. Furthermore, the printing may be used in order to rapidly form multiple separate compositions, wherein the individual compositions may be substantially identical or may differ in terms of size, shape and/or the relative amount of constituents.

In one embodiment of the present disclosure the composition is configured to be printed, such as by extrusion printing or electrospinning, such as by melt electrospinning.

In one embodiment of the present disclosure the composition is configured such that it can form melt spun fibers. This may be carried out by wherein the composition is filled inside a plastic syringe with nozzle size of 1 mm and heated up to around 60 °C. The fibers may thereafter be extruded into water bath at around 60 °C and cooled immediately after extrusion in order to keep a smooth fiber structure.

In another embodiment of the present disclosure the composition is configured such that it can be used in screen-printing. For example in a process wherein the composition may form patterns on a 0.5 mm thick plastic sheet (screen) by laser-cut using an Epilog laser-cutting machine. The patterned meshes may be fixed on a flat surface (PMMA plastic) and the composition may be screen printed using a squeegee blade after heating the samples at around 60 °C for 10 minutes.

Melt electrospinning relies on the same physics as electrostatic fiber drawing, the difference lies in the physical properties of the polymer melt, compared to a polymer solution. When comparing polymer melts and polymer solutions, the former are normally more viscous than polymer solutions. The molten electrified jet in general also requires cooling to solidify, while solution electrospinning in general relies on evaporation. Melt electrospinning typically produces micron diameter fibers, and may result in the path of the electrified jet being highly predictable, such that it is suitable for printing predetermined 2D and/or 3D features on a surface.

In one embodiment of the present disclosure the viscosity at a shear rate of 1/s and a temperature of T=50 °C is between 100 and 2000 Pa·s, more preferably between 200 and 1700 Pa·s, more preferably between 300 and 1500 Pa·s, more preferably between 500 and 1200 Pa·s, more preferably between 800 and 1000 Pa·s.

In one embodiment of the present disclosure the viscosity at a shear rate of 1/s and a temperature of T=50 °C is between 100 and 2000 Pa·s, more preferably between 200 and 2000 Pa·s, more preferably between 300 and 2000 Pa·s, more preferably between 500 and 2000 Pa·s, more preferably between 800 and 2000 Pa·s, more preferably between 1200 and 2000 Pa·s, more preferably between 1500 and 2000 Pa·s, more preferably between 1800 and 2000 Pa·s.

In one embodiment of the present disclosure the viscosity at a shear rate of 1/s and a temperature of T=50 °C is between 100 and 2000 Pa·s, more preferably between 100 and 1700 Pa·s, more preferably between 100 and 1500 Pa·s, more preferably between 100 and 1200 Pa·s, more preferably between 100 and 1000 Pa·s, more preferably between 100 and 700 Pa·s, more preferably between 100 and 400 Pa·s, more preferably between 100 and 200 Pa·s.

*Adhesive properties*

In one embodiment of the present disclosure the composition is tissue adherent. As such, the adhesive properties are preferably resistant to moisture.

Tissue adhesives must in general not only have sufficient adhesive and cohesive strength, but also the flexibility to comply with underlying tissue and the ability to retain these properties in moist or wet conditions. The swelling index should be low to prevent compression of nerves and blood vessels. Furthermore, the adhesive product should be easy to produce, store and apply.

In one embodiment of the present disclosure the adhesion strength to skin, bone, muscle and/or heart tissue, is between 1 and 50 kPa at a temperature between 20 to 40 °C, such as between 1 and 50 kPa, such as between 2 and 50 kPa, such as between 5 and 50 kPa, such as between 10 and 50 kPa, such as between 20 and 50 kPa, such as between 30 and 50 kPa, such as between 40 and 50 kPa.

In one embodiment of the present disclosure the adhesion strength to skin, muscle or heart tissue, is between 1 and 50 kPa at a temperature between 1 to 40 °C, such as between 1 and 40 kPa, such as between 1 and 35 kPa, such as between 1 and 30 kPa, such as between 1 and 25 kPa, such as between 1 and 20 kPa, such as between 1 and 15 kPa, such as between 1 and 10 kPa, such as between 1 and 5 kPa.

In one embodiment of the present disclosure the adhesion strength to brass, steel or glass, is between 1 and 300 kPa at a temperature between 20 to 40 °C, such as between 1 and 300 kPa, such as between 10 and 300 kPa, such as between 40 and 300 kPa, such as between 80 and 300 kPa, such as between 120 and 300 kPa, such as between 180 and 300 kPa, such as between 240 and 300 kPa.

In one embodiment of the present disclosure the adhesion strength to brass, steel or glass, is between 1 and 300 kPa at a temperature between 20 to 40 °C, such as between 1 and 250 kPa, such as between 1 and 210 kPa, such as between 1 and 170 kPa, such as between 1 and 140 kPa, such as between 1 and 110 kPa, such as between 1 and 80 kPa, such as between 1 and 50 kPa, such as between 1 and 20 kPa.

With the stress sensor being adherent to surfaces, such as metals, the composition may be used for protection of these surfaces. The composition may for example be applied to a surface, such as by printing, for protection against corrosion and/or other mechanisms of degradation of materials. The composition may in this embodiment of the present disclosure protect the surface by preventing gasses and/or radiation, such as ultraviolet radiation, to reach the surface.

*A stress sensor*

The present disclosure further relates to stress sensor comprising:

- the supramolecular conductive polymer composition of the invention;
- at least two electrical contacts;
- a power source; and
- an electronic test equipment;

wherein the stress sensor is arranged such that it forms at least one electrical circuit configured for measuring changes in an electrical property of the composition.

The at least two electrical contacts are configured for contacting the electronic test equipment for measuring pressure and/or the strain of the composition. As the stress sensor may be configured to be sensitive to pressure it may therefore be able to measure pressure variations in the environment. The stress sensor may therefore be used substantially similar to a manometer or it may be configured for measuring the pulse, such as a pulse meter. The stress sensor may further be used to measure the blood pressure, preferably both the systolic and diastolic blood pressure values. The pressure changes in the blood may apply a force on the stress sensor such that a change in the resistance and/or voltage of the stress sensor is changed, whereby the values, such as the strain, the pulse and/or the blood pressure can be derived, as known by a person skilled in the art.

The stress sensor is configured to form an electrical circuit, for measurement of changes in the electrical property of the composition, such as changes in the resistance.

The stress sensor comprises a power source and/or an electronic test equipment. The stress sensor is arranged such that it forms at least one electrical circuit. The stress sensor is configured for measuring changes in an electrical property of the composition of the invention, such as changes in the resistance of the composition of the invention. Changes in the resistance of the composition of the invention may for example be measured between the points of the composition where the electrical contacts electrically connect to the composition. Preferably said points are located at endpoints of the composition, preferably maximally spaced apart in an axis along which stress/deformation is to be measured.

In one embodiment of the present disclosure, the composition of the invention is provided substantially as a layer. The layer may as such have a planar profile such that it can easily be applied to a planar surface. Alternatively, the composition of the invention may have a curved surface, such that it follows the profile, such as the curvature, of a measurement site, such as an internal organ, the backside of a hand, the skin covering joints.

In one embodiment of the present disclosure the composition of the invention is attached to a support layer. The support layer may be configured to provide structural support, such as by being less easily deformed than the composition. The support layer may further be configured, such as by comprising a specific material, to have a higher Yield strength, and may in such a way provide the composition with a restoring force, when the composition has been elongated past its elastic limit.

The two electrical contacts are configured for measuring electrical changes, such as changes to the resistance of the composition, such as the resistance of the composition between the electrical contacts, such as by being connected to an electronic test equipment for measuring the resistance, such as an Ohmmeter.

In one embodiment of the present disclosure the at least two electrical contacts are positioned at endpoints/endsurfaces of the composition, such as the two substantially most distanced endpoints or endsurfaces. The electrical contacts are preferably positioned at the ends of the composition, such that when the composition is stretched measuring the resistance change between the contacts results in substantially the largest possible resistance change given that specific deformation. Contrary, a composition having electrical contacts at its midpoint would not be able to be used in providing detailed information of the elongation/deformation of the composition to the same extent. Contacts located at the endpoints would be displaced the most, and hence a certain elongation/deformation of the composition gives rise to a larger variation in the electrical resistance between the electrical contacts.

*Method for sensing stress*

The present disclosure further relates to a method for sensing stress, this subject matter falls outside the scope of the claims and is provided for information purposes only. The method comprises:

    providing the stress sensor assembly as disclosed elsewhere herein;
    contacting the stress sensor to a measurement site, such as a surface of a skin of a human, such as covering a joint; and
    measuring changes to the resistance and/or the voltage; and
    comparing the measured values to known values, such as previously measured values, or calibration values, for deriving values of strain and/or pressure applied to the composition.

Preferably changes to the voltage and/or resistance of the stress sensor assembly, may be measured between electrical contacts, the changes may for example be a result of deformation of the composition, such as stretching of the composition.

In one embodiment of the present disclosure the stress sensor assembly is configured for measuring a current in the stress sensor and/or a voltage difference between two points of the stress sensor assembly, such as two points of the stress sensors. The measurements of the voltage and/or the current may thereafter be used for deriving the stress and/or the pressure exerted on the stress sensor. The derivation of the stress and/or the pressure may be performed on a remote processing unit, such as a computer or a smartphone. The stress sensor assembly may therefore further be configured for transmission of measurement values to the remote processing unit. The stress sensor assembly may comprise a unit for wireless transmission of data to the remote processing unit, such as by Bluetooth. The resistance change and/or the voltage difference may thus be continuously monitored by the stress sensor and wirelessly transmitted to the remote processing unit for derivation of the stress and/or pressure values. The analysis and modulation of the signal data performed by the remote processing unit may comprise noise evaluation, noise suppression, storing values at a predetermined interval, triggering of alarm based on predetermined levels and/or sending alarm message at predetermined levels of pressure and/or strain.

**Examples**

The invention will in the following be described with reference to the examples. The examples are exemplary and are intended to illustrate some of the features of the presently disclosed invention, and are not to be construed as limiting.

*Example 1 - Extraction of silk fibroin*

Silk fibroin was extracted from Bombyx mori silk cocoons (Wild Fibres, UK). In a typical procedure, 5 g of cut cocoons was boiled in an aqueous solution (2 L) of 0.02 M sodium carbonate (Sigma-Aldrich) for 30 minutes. The obtained silk fibroin fibers were washed several times with MQ water and dried at room temperature for 24 hours. Then, the fibers were dissolved in 9.3 M lithium bromide (Honeywell) at 60 °C for 6 hours and dialyzed against MQ water for 3 days. Finally, the fibroin solution was centrifuged for 20 minutes (three times) at 12000 rpm and 4 °C to remove any impurities. The concentration of the silk fibroin in the solution was determined and typically the concentration was in the range of 6-7% w/v (60-70 mg/mL). The silk fibroin was thereafter used for formation of compositions as described herein.

*Example 2 - Preparation of reduced Graphene oxide*

Initially, graphene oxide was synthesized by modified Hummer's method using graphite flakes (Sigma-Aldrich, cat #332461, 150 $\mu$m flakes). In this method, 3.0 g of graphite flakes was mixed with a 9:1 mixture of concentrated $H_2SO_4/H_3PO_4$ (360:40 mL, Sigma-Aldrich) and stirred well for 30 minutes. Then, 18.0 g of $KMnO_4$ powder (Sigma-Aldrich) was gradually added into the solution under constant stirring. The reaction was performed under an ice bath in order to prevent the high exothermic reaction. After the complete addition of KMnO4, the reaction mixture was heated up to 55 °C and stirred for 3 days. Then, the reaction mixture was cooled to room temperature and poured into 400 mL ice. Afterwards 30% $H_2O_2$ was added dropwise under constant stirring until the color of the mixture turned to yellow and stirred overnight at room temperature. The reaction mixture was centrifuged for 30 minutes at a speed of 13000 rpm and solid GO was collected. The resulting solid material was washed 3 times with 0.1 M HCl and several times with MQ water until the measured pH of the supernatant was 5-6. Finally, the collected solid GO material was freeze-dried and used for reduced graphene oxide preparation. In order to reduce the graphene oxide, 300 mg of freeze dried GO was dissolved in 50 ml MQ water and sonicated for 90 minutes to obtain a uniform brown solution. Then, 400 mg of Tannic Acid in 50 ml MQ water was added into the homogeneous GO solution and sonicated again for 90 minutes. Finally, the reaction mixture was heated at 85 °C for 9 hours. The resulting solid material was then washed with 40 mL of MQ water and freeze-dried for 12 hours. The reduced graphene oxide (rGO) was thereafter used for formation of compositions as described herein.

*Example 3 - Preparation of Silk-reduced Graphene oxide (SiGo) supramolecular polymer compositions*

Initially, stock solutions of 50% w/v tannic acid (TA, Sigma-Aldrich), 2M $CaCl_2$ and 2 mg/mL rGO were prepared. Required volumes of silk fibroin solution and $CaCl_2$ were measured and mixed together to reach the final content of 560 mg silk fibroin and 0.1 M $CaCl_2$, respectively. Subsequently, required volumes of graphene solutions (16, 33 and 70 mL) were mixed with the above mixture in order to reach a silk to graphene ratio of 5, 10 and 20% w/w and maintained the total volume as 80 mL by adding water. Finally, 5.6 ml of 50% w/v TA solution was gradually added to a stirring solution and mixed with spatula until complete formation of SiGo composition. A sample without conducting filler (SiGo-0%) and a control sample without salt and conducting filler were prepared using the same protocol for comparison. The prepared hydrogel was washed and kept for 24 hours in Milli-Q water prior to analysis. While the reduced graphene oxide may comprise derivatives of polyphenols, preparation of the composition thereby involves addition of further polyphenols (TA), that is not necessarily bound to the reduced graphene oxide. The compositions (apart from the control samples) had a constant weight ratio of silk fibroin (SF):Tannic acid (TA) at 1:5 and 0.1 M $CaCl_2$. This ration between SF and TA, and the amount of $CaCl_2$ was used for all examples shown herein.

*Example 4. Characterization* of *SiGo compositions: Scanning electron microscopy (SEM)*

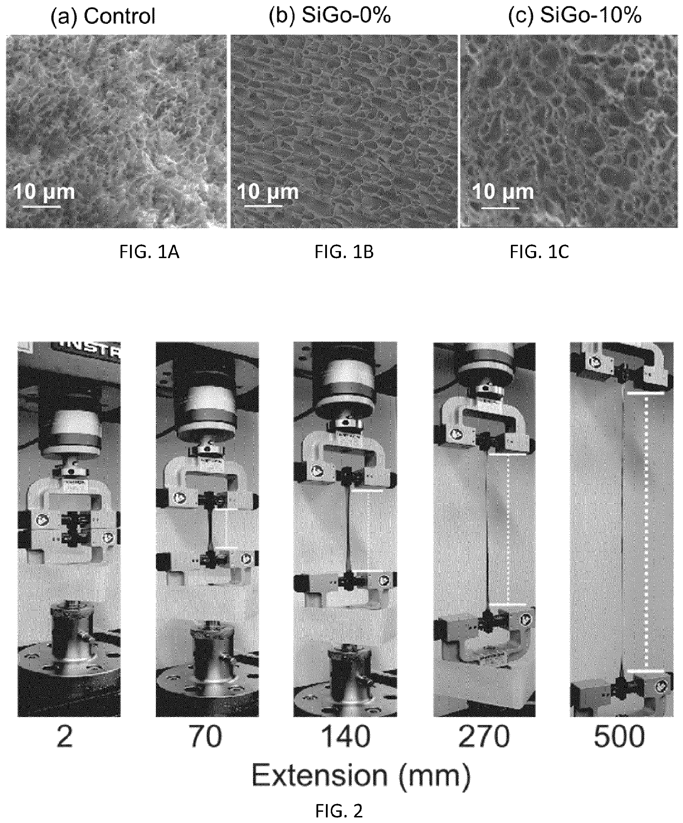

In order to observe the morphology of the SiGo compositions produced according to Example 3, the cross-sectional images of the freeze dried SiGo compositions were observed by a FEI Quanta 200 ESEM FEG Scanning Electron Microscope (USA) with a field emission gun, in which the accelerating voltage was kept at 5 kV and emission current at 5 mA. Prior to the SEM imaging, the freeze dried samples were cut and sputter coated with gold (5nm). SEM images of SiGo compositions are shown in Figure 1, where the porous nature of freeze-dried silk-tannic acid compositions (Control, Fig. 1A) with different composition of reduced graphene oxide (rGO), (Fig. 1B - 0%, Fig. 1C 10%).

*Example 5 Characterization* of *SiGo compositions - Mechanical Properties*

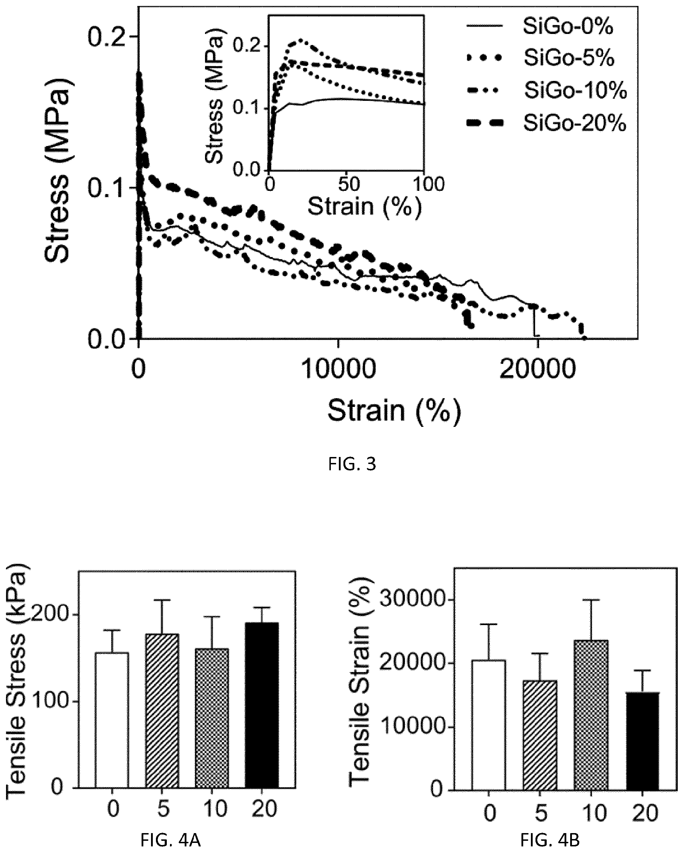

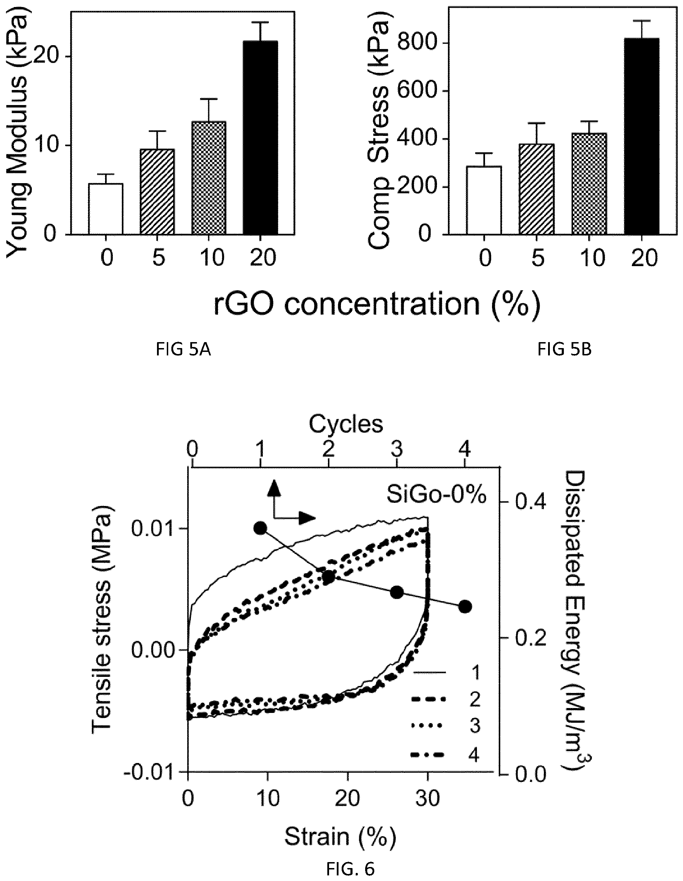

Mechanical properties of the SiGo compositions produced according to Example 3 were assessed with an Instron 5967 Universal Testing Systems (UK) in tensile and compression mode with 500 N load-cell, Fig. 2. To perform the tensile measurements, SiGo strips of 22 mm length, 14 mm width and approximately 1 mm thickness were prepared. Samples were strained at the rate of 100 mm min$^{-1}$ by keeping 2 mm gauge length until the failure point was reached. The thickness of each strip was measured independently using a digital electronic Vernier caliper before the test. To perform the compression test, SiGo compositions were molded into cylindrical shapes of 10 mm diameter and 5mm height. Samples were compressed at the rate of 0.5 mm min$^{-1}$ until 70% compression achieved. The stress-strain curve (Fig. 3) was recorded using Bluehill 3 testing software and tensile strength (ultimate tensile stress) (Fig. 4A), tensile strain at break (also known as elongation at break) (Fig. 4B), Young's modulus (Fig. 5A) and compression stress (Fig. 5B) was determined. The samples showed that the graphene content impacted the mechanical properties of the composition. The observed stretching property for the composition increased from 20500% (toughness: 8.9 $\pm$ 1.1 MJ m-3) to 24000 % (toughness: 9.9 $\pm$ 1.9 MJ m-3) with 10% rGO incorporation and then dropped to 15500% (toughness: 13.9 $\pm$2.2 MJ m-3) for the highest rGO concentration, while the tensile strength seemed unaffected by rGO. A sharp three-fold increase in compressive strength from 287 to 820 kPa is seen as the rGO incorporation increased to 20%. Likewise, the young modulus increased four-fold from 5.7 to 21.7 kPa.

*Example 6. Characterization* of *SiGo compositions - Cyclic tensile test*

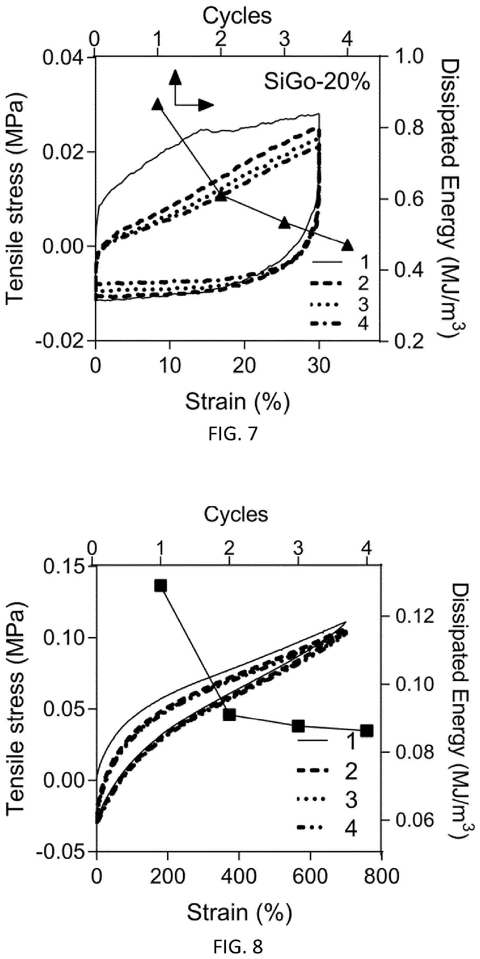

Tests for mechanical properties of the SiGo compositions produced according to Example 3 were performed with an Instron 5967 Universal Testing Systems (UK) in tensile and compression mode with 500 N load-cell. Molded and flattened SiGo specimens of 25 mm length, 14 mm width and approximately 1 mm thickness were used for cyclic tensile measurements. The specimens were stretched up to 30% of the strain and in both loading and unloading cycles, the stretching was assessed at the rate of 10 mm min$^{-1}$ by keeping 5 mm gauge length. The thickness of each strip was measured independently using a digital electronic Vernier caliper before the test. The stress-strain curve was recorded using Bluehill 3 testing software. The strips were stretched four times, first stretch is given by the solid line, the second stretch by the dashed line, the third stretch by the dotted line and the fourth stretch by the dot-dash line. The area between the loading and unloading curves for each cycle was calculated and reported as energy dissipated per unit volume. The results show that pristine SiGo-0% (Fig. 6) dissipated energy much less effectively when compared to SiGo-20% samples (Fig. 7). Further, to improve cyclic stretching ability, the SiGo-20% samples were encapsulated in an acrylic foam tape (3M VHB) and the cyclic stretching measurements were performed as explained above, but until 600% of strain was reached (Fig. 8). In this case, the encapsulated specimen can be stretched up to 600% strain with much lower hysteresis and the dissipated energy becomes more stable after the first cycle.

*Example 7 Water content in the SiGo compositions*

The compositions produced according to Example 3 were not entirely hydrogels, neither were they completely solid, indeed they were more reminiscent of something in between - almost like a gum.

The water content of the compositions was determined by freeze drying the SiGo composition. The weights of the samples before (Wo) and after (Wd) freeze drying process were measured using a scale with an accuracy of 0.001g, and water content (%) was subsequently calculated using the following equation:

$$\text{Water Content } (\%) = \frac{W_o - W_d}{W_o} \times 100$$

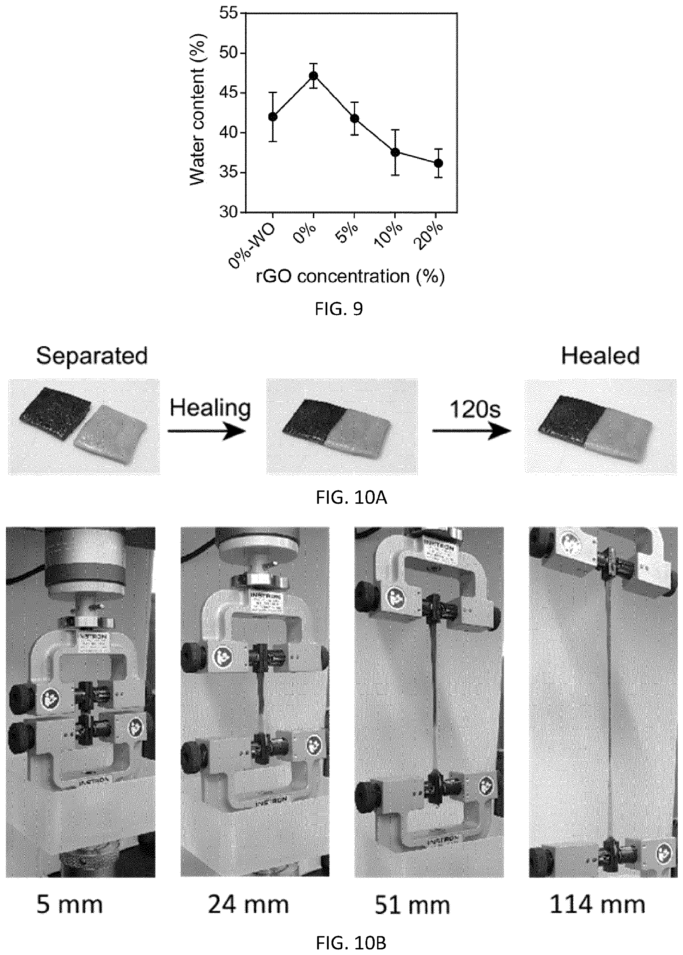

The water content in the composition was found to be decreased with an increasing amount of reduced graphene oxide (Figure 9). With a water content decreasing from 47% to 36% as the rGO concentration reached 20% (Fig. 9). Similar to the other figures herein, the sample labelled "0%-WO" is 0% rGO and without salt ($CaCl_2$).

*Example 8 Self-healing ability of the SiGo compositions*

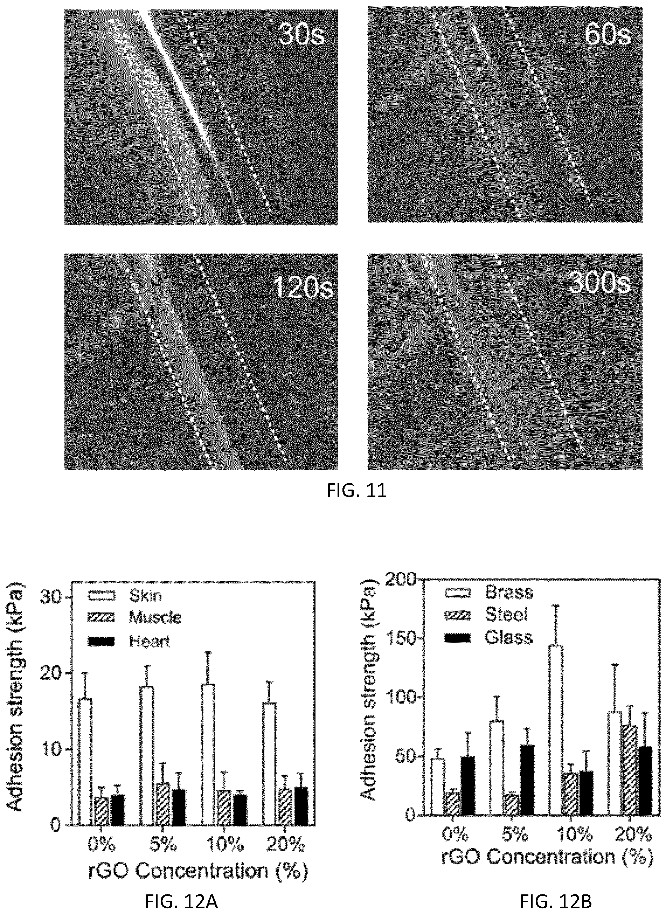

To characterize the self-healing properties of the SiGo compositions produced according to Example 3, the compositions were cut into two similar pieces, put together and allowed to heal at room temperature. All SiGo compositions healed within a few minutes and returned to their original shape (Fig. 10A). In order to differentiate the healing part, SiGo-0% and SiGo-20% were used in the example. After healing for 120 s, the specimen was strained at 100 mm min$^{-1}$ using an Instron 5967 Universal Testing System and the healed part remained intact after applying high mechanical strain (Fig. 10B). Optical microscopy images were taken at different time intervals to visualize the healing ability of the specimens (Fig. 11). The images clearly show that the initial gap was narrowed within 60 s, healed within 120 s and the scar completely disappeared after 300s.

*Example 9 Adhesiveness of the SiGo compositions*

In order to show preliminary adhesive properties of the SiGo compositions produced according to Example 3, the samples were sandwiched between glass sheets of 1 mm thickness and a weight of 1 Kg during 10 min without forcing. A weight of 1 Kg could firmly adhere to the glass surface by the SiGo compositions. The sample could also adhere and hang the weight of 100g directly to the human finger without introduction of curing agents or external aids. Lap shear strength experiments were used to determine the adhesive properties of SiGo system on porcine skin, heart and muscle surfaces, following the standard lap-shear test method (ASTM F2255) using Instron 5967 Universal Testing Systems (UK) in tensile mode with 500 N load-cell. The tissue samples with the dimensions of 10 mm x 40 mm were adhered by the SiGo samples (10 mm x 10 mm) and immersed in 37°C PBS with 100 g weight applied during 10 minutes before testing (Fig. 12A). Similarly, the adhesive properties of SiGo samples were measured on the surface of steel, brass and glass sheet (Fig. 12B) with a bonding area of 12.7 mm x 25.4 mm. The adhesion strength (Lap shear strength) was calculated as the maximum load divided by the bond area in kilo-Pascal (kPa). The adhesive strength of the SiGo systems on brass surfaces is higher than in the steel and glass surfaces. Furthermore, the adhesive strength of the SiGo compositions to porcine skin tissue is much higher than that of heart and muscle tissues. It is noteworthy that the results indicate that the rGO concentration is playing an important role in the adhesion strength of the SiGo system.

*Example 10 Moldability of the SiGo compositions*

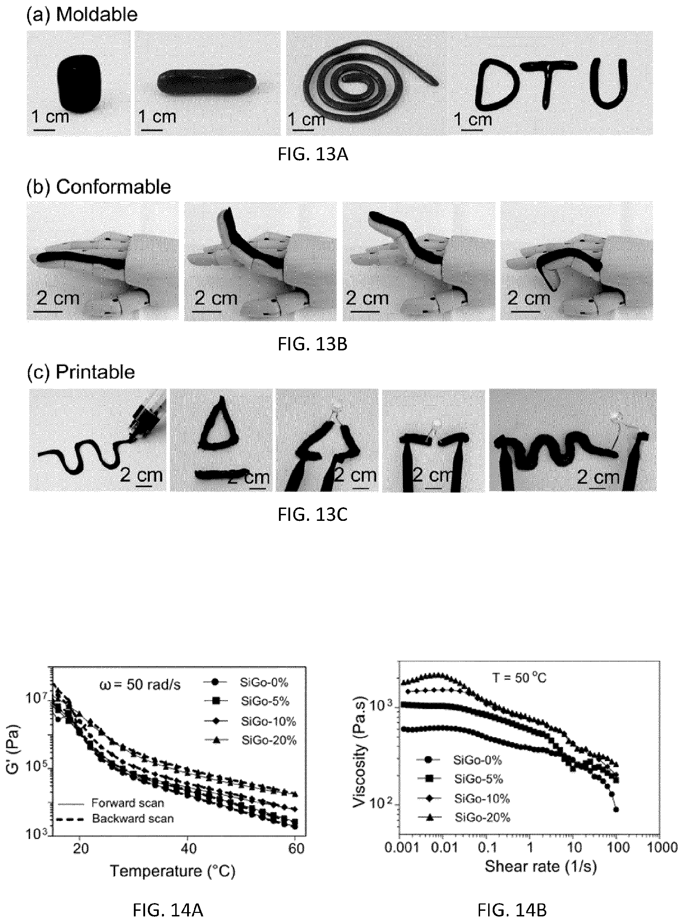

Another aspect of these homogeneous and stable SiGo compositions is that they can repeatedly mold into various 3D shapes as shown in Fig.13A, displaying measurement results of compositions produced according to Example 3. Additionally, they can also mold and attach to any surface due to their adhesive nature. SiGo-20% is highly conformable to a humanoid prosthetic wooden hand (Fig. 13B). Furthermore, the viscosity of the supramolecular compositions can be decreased at elevated temperature which makes them printable, for example the SiGo-20% (Fig. 13C). Because of their conductive properties, they can be printed into various circuit structures for the application in electronics.

*Example 11 Rheological properties of the SiGo compositions*

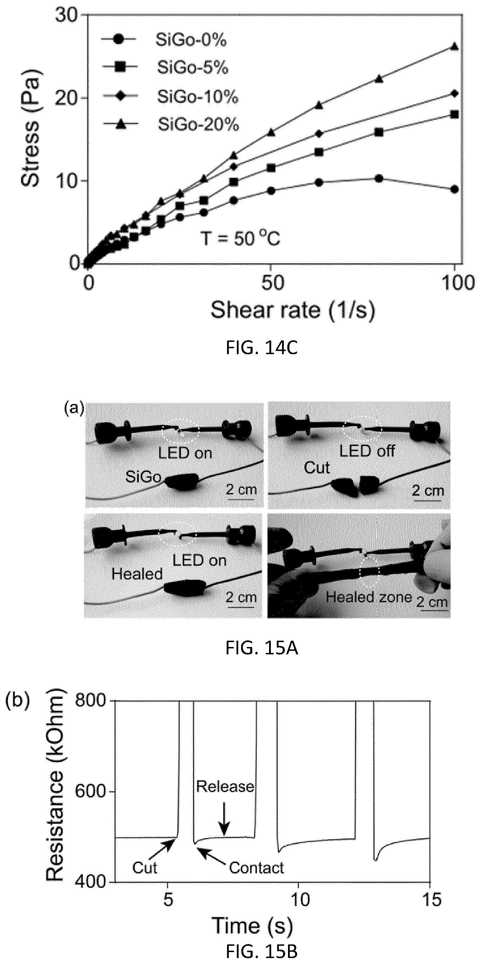

The viscoelastic behavior of SiGo compositions produced according to Example 3 was determined by Discovery Hybrid Rheometer HR-2, TA Instruments. Samples were loaded between two 20 mm diameter parallel plates with a 1 mm gap at T = 25°C. Dynamic thermal-analysis was conducted by performing upwards and downward temperature ramps from 15 °C to 60°C at a constant angular frequency (50 rad/s) and 1% strain. Figure 14A shows storage modulus of the upward and downward temperature of different SiGo samples. The result shows that the storage modulus is decreased at higher temperatures and hysteresis is less pronounced, which indicates supramolecular compositions are stronger, stable and moldable at elevated temperatures. The shear viscosity of the SiGo compositions was then measured at 25 °C in a shear rate range from 0.1 to 100 s$^{-1}$. The viscosity response of SiGo compositions was concluded to be highly dependent on the shear rate and to exhibit more pronounced shear thinning properties at higher concentrations of rGO (Figure 14B and C).

*Example 12 Self-healing electronic circuit*

To further demonstrate the self-healing feature of the SiGo compositions, an electronic circuit was designed comprising a LED bulb (3-3.2V working load), SiGo compositions produced according to Example 3 as a conductor, and 3 dry batteries. The LED bulb was connected to the batteries through the SiGo conductor using copper wires. When the circuit was turned on, the bulb was lighted, indicating the higher conductivity of the SiGo compositions. Then, the self-healing ability of the sensor was demonstrated on the circuit as shown in Figure 15A. The circuit becomes open and the LED bulb extinguished when the composition was cut and it lighted up again after self-healing the composition. The self-healed part remained intact even after stretching the circuit. The resistance of the SiGo sensor circuit was monitored with an Agilent 4294A precision impedance analyzer (USA) operated at 2 kHz by applying an AC voltage ranging from -0.5 to 0.5 V. The resistance was measured during multiple macroscopic damages and self-healing scenarios, where the resistance was recovered after self-healing as shown in Figure 15B.

*Example 13 Stretchable and bendable sensor*

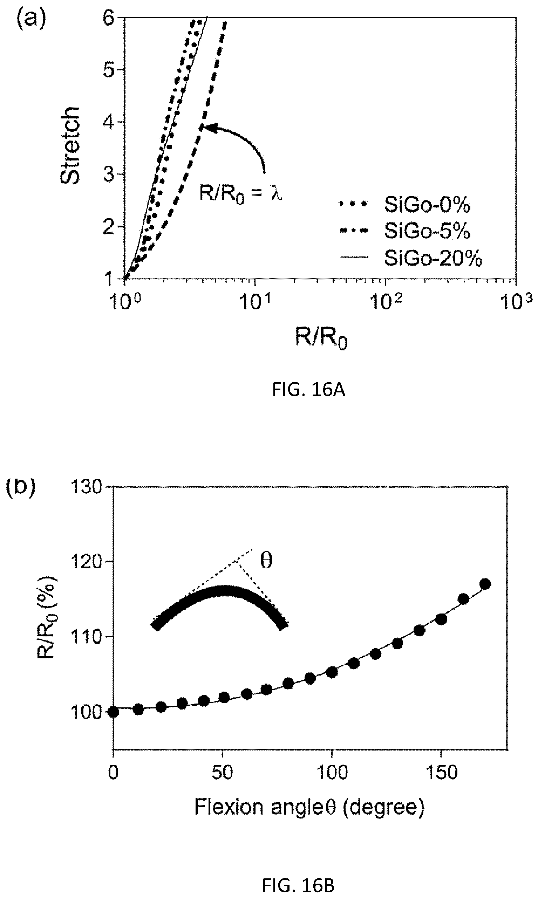

To measure the stretching and bending response of the compositions produced according to Example 3, a sensor was fabricated by connecting tin plated copper sheets to both ends of 5 mm-wide, 3mm length and 1 mm thick SiGo rectangular strip. All sensors were encapsulated in an acrylic foam tape (3M VHB) to prevent the evaporation of water. The resistance changes in response to stretching was monitored with an Agilent 4294A precision impedance analyzer (USA) operated at 2 kHz by applying an AC voltage ranging from -0.5 to 0.5 V. Relative resistance ($R/R_0$) was then reported as the measured values, where R is the resistance at measuring scenarios and $R_0$ is the initial resistance. The relative resistance response of the SiGo compositions was directly proportional to the strain and bending angle as shown in Figure 16A and Figure 16B respectively.

*Example 14 Cyclic stretching performance of the sensor*

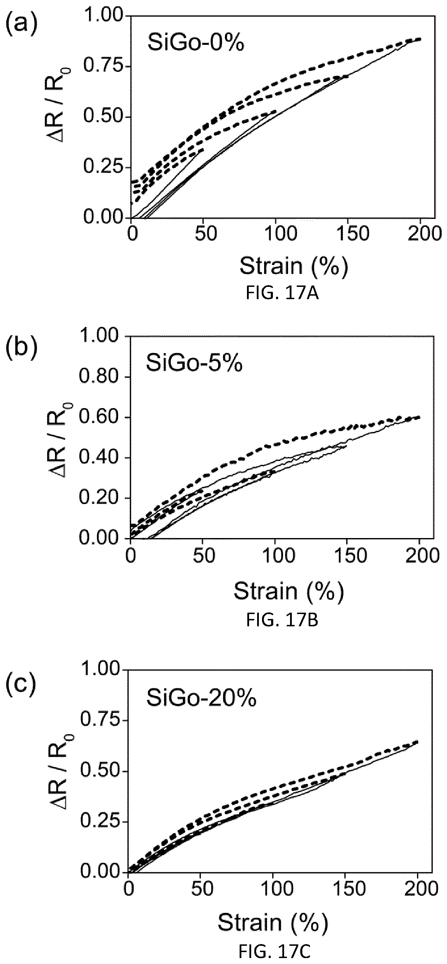

To measure the cyclic stretching response of the compositions produced according to Example 3, a sensor was fabricated by connecting tin plated copper sheets to both ends of 5 mm-wide, 3mm length and 1 mm thick SiGo rectangular strip. The compositions of the strips comprised 0% rGO (Fig. 17A), 5% rGO (Fig. 17B) and 20% rGO (Fig. 17C). All sensors were encapsulated in an acrylic foam adhesive tape (3M VHB) to prevent the evaporation of water. The resistance changes in response to stretching was monitored with an Agilent 4294A precision impedance analyzer (USA) operated at 2 kHz by applying an AC voltage ranging from -0.5 to 0.5 V. Relative resistance ($\Delta R/R_0$) was then reported as the measured values, where $\Delta R$ is the difference between the resistance at measuring scenarios and the initial resistance ($R_0$).

*Example 15 Sensor for monitoring the body movements*

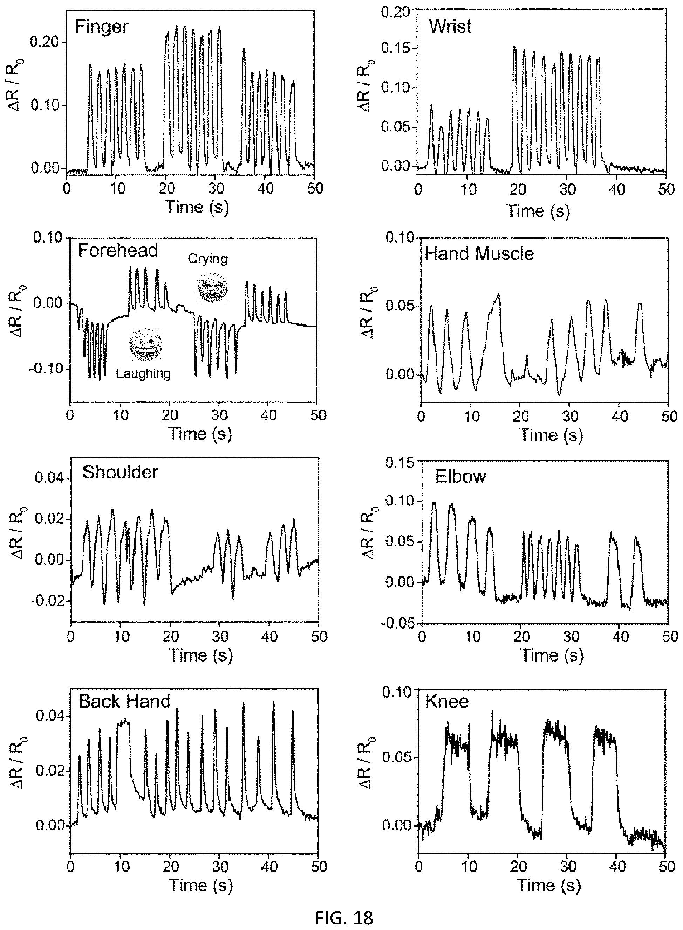

In order to monitor the movements of the body, a sensor comprising compositions produced according to Example 3 was fabricated by connecting tin plated copper sheets to both ends of a 5 mm-wide and 1 mm thicker SiGo rectangular strip. The length of the sensor varied from 3 to 6 cm in order to attach to various moving parts of the body such as finger, wrist, forehead, hand muscle, shoulder, elbow, back hand, and knee as shown in Figure 18 respectively. All sensors were encapsulated in an acrylic foam adhesive tape (3M VHB) to prevent the water evaporation. The resistance changes in response to body movements were monitored with an Agilent 4294A precision impedance analyzer (USA) operated at 2 kHz by applying an AC voltage ranging from -0.5 to 0.5 V. Relative resistance ($\Delta R/R_0$) was then reported as the measured values, where $\Delta R$ is the difference between the resistance at measuring scenarios and the initial resistance ($R_0$). Figure 18 shows the resistance change signals of the SiGo sensor depending on the body movements. The sensor could precisely track the fast movements of the body parts by monitoring the resistance changes. Moreover, the signal patterns are greatly dependent on the body parts and the sensor attached to the forehead can distinguish the signals of facial expressions such as laughing and crying.

*Example 16 Chemical characterizations through Attenuated Total Reflectance- Fourier-Transform Infrared (ATR-FTIR) spectroscopy*

The compositions, produced according to example 3, were analyzed by ATR-FTIR spectroscopy, at different SF - rGO ratios (from 0 to 20 wt% nanomaterial loading), while keeping the constant weight ratio of SF:TA at 1:5 and 0.1 M $CaCl_2$.

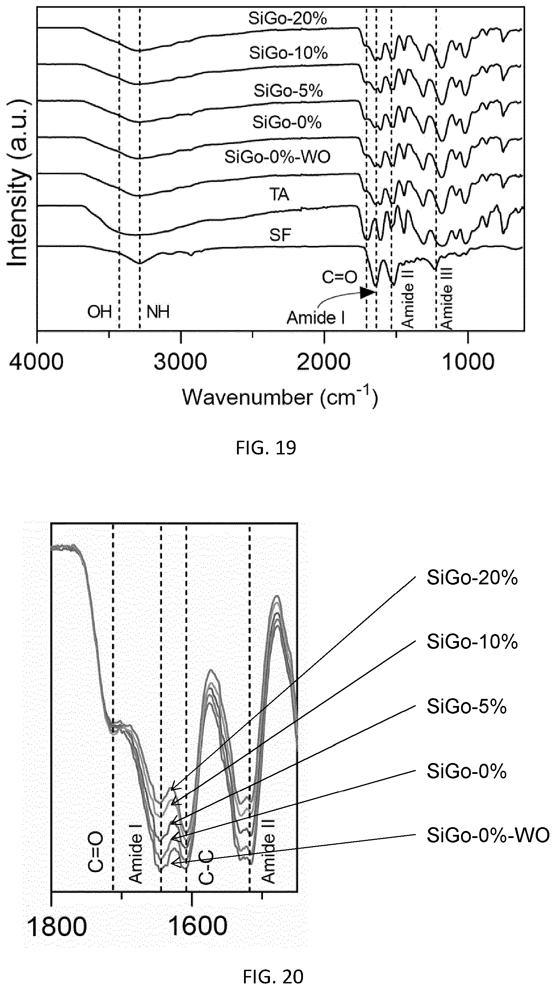

As shown in the Fig. 19, and further in Fig. 20, the FTIR spectra of the composition samples exhibit prominent signature peaks associated with silk (amide I (1642 cm$^{-1}$), amide II (1515 cm$^{-1}$), amide III (1235 cm$^{-1}$)) and TA (C=O stretching (1698 cm$^{-1}$), C-C stretching (1609 cm$^{-1}$), C-O-C stretching (1308 cm$^{-1}$)). Specifically, the composite showed a wavenumber shift of the TA associated hydroxyl group (OH) centered at 3400 cm$^{-1}$ and the amide (NH) associated peak of silk centered at 3290 cm$^{-1}$ to 3323 cm$^{-1}$.

These shifts indicate the presence of a multitude of hydrogen bonding schemes between TA and SF of varying strength ranging from $OH_{SF}$....$OH_{TA}$ (4.7 kcal/mol), $NH_{SF}$....$OH_{TA}$ (7.4 kcal/mol), and $OH_{TA}$....$C=O_{SF}$ (4.6 kcal/mol).[14] In addition, the peak at 1698 cm$^{-1}$ , magnified in Fig. 20, corresponding to the carbonyl group (C=O) of TA is shifted to 1713 cm$^{-1}$ confirming the weak interaction between silk and TA through $NH_{SF}$....$C=O_{TA}$ (3.9 kcal/mol) hydrogen bond formation.

From FTIR we can also examine possible electrostatic interactions between positively charged calcium (Ca$^{2+}$) ions with negatively charged amino acids (COO$^-$) such as glutamate and aspartate within the SF chain. This interaction did not make a significant change in the peak position of amide peaks, howbeit a decreased intensity of the amide I (1642 cm$^{-1}$) and amide II (1515 cm$^{-1}$) of SF were observed, which typically are associated with structural changes occurring in the backbone of the SF chain via the electrostatic interactions with Ca$^{2+}$ ions. Similar to the other figures herein, the sample labelled "0%-WO" is 0% rGO and without salt (CaCl$_2$).

A decrease in intensity corresponding to the amide I and amide II bands within the SF spectra can be seen after rGO inclusion, attributed to conformational changes occurring in the secondary structure of SF due to surface interactions with rGO. These conformational changes in the molecular level of SF impacts the mechanical properties such as toughness and stiffness, and consequently, the amide I spectra in the 1571-1800 cm-1 region is determined to elucidate the secondary structures present in the silk fibroin of the composition..

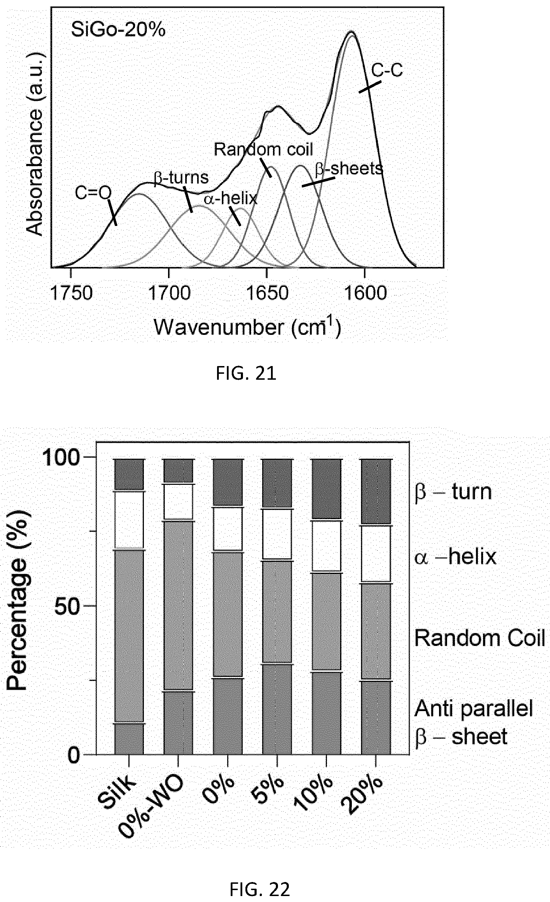

The secondary structures of each sample could thereby be measured. Fig. 21 shows exemplary measurement data for the sample comprising 20 wt. % rGO. Similar measurements data were retrieved for all samples. The resulting data is summarized in Fig. 22. Similar to the other figures herein, the sample labelled "0%-WO" is 0% rGO and without salt (CaCl$_2$). Four secondary structures were identified and quantified, including β-sheets, random coils, β-helices, and β-turn structures. β-sheets are crystalline structures formed by interpeptide antiparallel hydrogen bonded strands - linked to material stiffness and toughness - while β-turns arise from the transformation of loose hairpin structures into tight turns and associated with an increase in sample elasticity. From the results it can be concluded that the addition of TA and CaCl$_2$ increased the β-sheets and β-turn structures (together 42%) compared to pristine silk (22%) and SiGo without CaCl$_2$ samples (30%). The nanoreinforcement of the composition with graphene further increased the percentage of β-structures to 49% at the highest rGO concentration.

## Claims

1. A supramolecular conductive polymer composition comprising;

    - a linear polymer comprising repeating subunits comprising at least one functional group, for forming a part in a hydrogen bond, selected from alcohol, amine, ether, amide, carboxylic acid, ester, ketone, nitrile, aldehyde and carbamide;
    - a polyphenol comprising a minimum of 12 aromatic hydroxyl groups;
    - a solvent with a dielectric constant of at least 20; and
    - an electrically conductive filler;

    wherein the linear polymer is not covalently cross-linked.

2. The composition according to claim 1, wherein the polymer comprises fibroin in β-sheet and/or β-turn formation, at least for 20% of the total length of the polymer.

3. The composition according to any of the preceding claims, wherein the composition comprises at least 10 % w/w of unbound polyphenol.

4. The composition according to any of the preceding claims, wherein the polymer has a molecular weight between 10 and 1500 kDa.

5. The composition according to any of the preceding claims, wherein the polymer has, between 1 and 7 hydrogen-bond acceptor groups and/or between 1 and 7 hydrogen-bond donor groups, per repeated subunit.

6. The composition according to any one of the preceding claims, wherein the polyphenol has a molecular weight between 500-4000 Da; and/or

    wherein the polyphenol has between 2 and **40** gallic acid, pyrogallic acid, sinapoyl alcohol, coniferyl alcohol or paracoumaryl alcohol moieties; and/or.
    wherein the polyphenol is extracted from natural sources, such as wine, oak, tea, grapes, olives and/or oil, such as olive oil, preferably wherein the polyphenol is tannic acid.

7. The composition according to any of the preceding claims, wherein the composition comprises between 10 and 60 wt.% of the polymer; and/or.

wherein the composition comprises between 30 and 70 wt.% of the polyphenol; and/or
wherein the composition comprises between 10 and 90 wt.% of the solvent, such as water; and/or
wherein the composition comprises between 2 and 10 wt.% of the conductive filler.

8. The composition according to any one of the preceding claims, wherein the polymer is selected from the list including natural silk, synthetic silk, fibroin, starch, dextran, chitosan, polyvinyl alcohol, pectin, poly(ethylene glycol) diacrylate, polyacrylamide, polyethylene glycol or a mixture thereof, preferably wherein the polymer is silk fibroin; and/or wherein the electrically conductive filler is selected from the list including graphene, intrinsically conducting polymers such as Polyaniline, Polypyrrole, Poly(3,4-ethylenedioxythiophene) and/or polystyrene sulfonate, iron ions, 2D transition metal carbides, carbonitrides, nitrides, MXenes, nanoclays such as bentonite, kaolinite, hectorite, halloysite, and/or montmorillonite, and/or elongated carbon nanostructures, such as carbon nanotubes.

9. The composition according to any one of the preceding claims, wherein the conductivity of the composition is between $1 \times 10^{-6}$ and $1 \times 10^{-1}$ S/cm

10. The composition according to any one of the preceding claims, wherein the weight ratios between the polymer, the polyphenol, and the conductive filler are within the intervals 10-40:30-70:0.1-20 respectively.

11. The composition according to any one of the preceding claims, wherein the composition comprises a salt, such as a divalent salt, such as selected from the group including calcium chloride, magnesium chloride and/or lithium chloride, and/or such as
wherein the composition comprises between 10 and 20 wt.% of the salt.

12. The composition according to claim 11, wherein the weight ratios between the polymer, the polyphenol, the conductive filler and the salt are within the intervals 10-40:25-75:3-15:10-20 respectively.

13. The composition according to any one of the preceding claims, wherein the composition is a self-healable composition; and/or
wherein the composition is biocompatible and/or biodegradable.

14. The composition according to any one of the preceding claims, wherein the viscosity at a shear rate of 1/s and a temperature of T=50 °C is between 100 and 2000 Pa·s; and/or

wherein the Young's modulus, at room temperature, is below 40 kPa; and/or
wherein the composition can be uniaxially stretched to a length of at least 100 times the original length before rupture, such as along said axis, more preferably at least 200 times the original length before rupture; and/or
wherein the composition has an elongation at break of at least 10000%.

15. A stress sensor comprising:

- the composition according to any of claims 1-14;
- at least two electrical contacts;
- a power source; and
- an electronic test equipment;

wherein the stress sensor is arranged such that it forms at least one electrical circuit configured for measuring changes in an electrical property of the composition.

**Patentansprüche**

1. Supramolekulare leitfähige Polymerzusammensetzung, umfassend;

ein lineares Polymer, umfassend sich wiederholende Untereinheiten, umfassend mindestens eine funktionelle Gruppe zum Bilden eines Teils einer Wasserstoffbindung, ausgewählt aus Alkohol, Amin, Ether, Amid, Carbonsäure, Ester, Keton, Nitril, Aldehyd und Carbamid;
ein Polyphenol, umfassend mindestens 12 aromatische Hydroxylgruppen;
ein Lösungsmittel mit einer Dielektrizitätskonstante von mindestens 20; und

einen elektrisch leitfähigen Füllstoff;
wobei das lineare Polymer nicht kovalent vernetzt ist.

2. Zusammensetzung nach Anspruch 1, wobei das Polymer über mindestens 20 % der Gesamtlänge des Polymers Fibroin in β-Faltblatt- und/oder β-Schleifenform umfasst.

3. Zusammensetzung nach einem der vorhergehenden Ansprüche, wobei die Zusammensetzung mindestens 10 Gew.-% ungebundenes Polyphenol umfasst.

4. Zusammensetzung nach einem der vorhergehenden Ansprüche, wobei das Polymer ein Molekulargewicht zwischen 10 und 1500 kDa aufweist.

5. Zusammensetzung nach einem der vorhergehenden Ansprüche, wobei das Polymer zwischen 1 und 7 wasserstoffbindende Akzeptorgruppen und/oder zwischen 1 und 7 wasserstoffbindende Donorgruppen pro wiederholte Untereinheit aufweist.

6. Zusammensetzung nach einem der vorhergehenden Ansprüche, wobei das Polyphenol ein Molekulargewicht zwischen 500-4000 Da aufweist; und/oder

   wobei das Polyphenol zwischen 2 und 40 Gallussäure-, Pyrogallussäure-, Sinapylalkohol-, Coniferylalkohol- oder Paracumarylalkohol-Einheiten aufweist; und/oder
   wobei das Polyphenol aus natürlichen Quellen, wie Wein, Eiche, Tee, Trauben, Oliven und/oder Öl, wie Olivenöl, extrahiert wird, wobei das Polyphenol vorzugsweise Gerbsäure ist.

7. Zusammensetzung nach einem der vorhergehenden Ansprüche, wobei die Zusammensetzung zwischen 10 und 60 Gew.-% des Polymers umfasst; und/oder

   wobei die Zusammensetzung zwischen 30 und 70 Gew.% des Polyphenols umfasst; und/oder
   wobei die Zusammensetzung zwischen 10 und 90 Gew.-% des Lösungsmittels, wie Wasser, umfasst; und/oder
   wobei die Zusammensetzung zwischen 2 und 10 Gew.-% des leitfähigen Füllstoffs umfasst.

8. Zusammensetzung nach einem der vorhergehenden Ansprüche, wobei das Polymer aus der Liste ausgewählt ist, die natürliche Seide, Kunstseide, Fibroin, Stärke, Dextran, Chitosan, Polyvinylalkohol, Pektin, Poly(ethylenglykol) diacrylat, Polyacrylamid, Polyethylenglykol oder eine Mischung davon beinhaltet, wobei das Polymer vorzugsweise Seidenfibroin ist; und/oder
   wobei der elektrisch leitfähige Füllstoff aus der Liste ausgewählt ist, die Graphen, intrinsisch leifähige Polymere, wie Polyanilin, Polypyrrol, Poly(3,4-ethylendioxythiophen) und/oder Polystyrolsulfonat, Eisenionen, 2D-Übergangsmetallcarbide, Carbonitride, Nitride, MXene, Nanoton, wie Bentonit, Kaolinit, Hectorit, Halloysit und/oder Montmorillonit und/oder längliche Kohlenstoff-Nanostrukturen, wie Kohlenstoff-Nanoröhren, beinhaltet.

9. Zusammensetzung nach einem der vorhergehenden Ansprüche, wobei die Leitfähigkeit der Zusammensetzung zwischen $1 \times 10^{-6}$ und $1 \times 10^{-1}$ S/cm ist

10. Zusammensetzung nach einem der vorhergehenden Ansprüche, wobei die Gewichtsverhältnisse zwischen dem Polymer, dem Polyphenol und dem leitfähigen Füllstoff jeweils in den Bereichen von 10-40:30-70:0,1-20 sind.

11. Zusammensetzung nach einem der vorhergehenden Ansprüche, wobei die Zusammensetzung ein Salz, wie ein zweiwertiges Salz, umfasst, wie ausgewählt aus der Gruppe, die Calciumchlorid, Magnesiumchlorid und/oder Lithiumchlorid beinhaltet, und/oder wie
    wobei die Zusammensetzung zwischen 10 und 20 Gew.-% des Salzes umfasst.

12. Zusammensetzung nach Anspruch 11, wobei die Gewichtsverhältnisse zwischen dem Polymer, dem Polyphenol, dem leitfähigen Füllstoff und dem Salz jeweils in den Bereichen von 10-40:25-75:3-15:10-20 sind.

13. Zusammensetzung nach einem der vorhergehenden Ansprüche, wobei die Zusammensetzung eine selbstheilende Zusammensetzung ist; und/oder
    wobei die Zusammensetzung biokompatibel und/oder biologisch abbaubar ist.

**14.** Zusammensetzung nach einem der vorhergehenden Ansprüche, wobei die Viskosität bei einer Scherrate von 1/s und einer Temperatur von T=50 °C zwischen 100 und 2000 Pa·s ist; und/oder wobei der Elastizitätsmodul bei Raumtemperatur unter 40 kPa ist; und/oder

wobei die Zusammensetzung einaxial auf eine Länge von mindestens dem 100-Fachen der ursprünglichen Länge vor dem Bruch, wie entlang der Achse, gedehnt werden kann, vorzugsweise auf mindestens das 200-Fache der ursprünglichen Länge vor dem Bruch; und/oder
wobei die Zusammensetzung eine Bruchdehnung von mindestens 10000 % aufweist.

**15.** Belastungssensor, umfassend:

Zusammensetzung nach einem der Ansprüche 1 bis 14;
mindestens zwei elektrische Kontakte;
eine Energiequelle; und
ein elektronisches Prüfgerät;
wobei der Spannungssensor derart angeordnet ist, dass er mindestens einen elektrischen Schaltkreis bildet, der zum Messen von Änderungen einer elektrischen Eigenschaft der Zusammensetzung konfiguriert ist.

**Revendications**

**1.** Composition polymère conductrice supramoléculaire comprenant ;

- un polymère linéaire comprenant des sous-unités répétitives comprenant au moins un groupe fonctionnel, pour former une partie dans une liaison hydrogène, choisi parmi l'alcool, l'amine, l'éther, l'amide, l'acide carboxylique, l'ester, la cétone, le nitrile, l'aldéhyde et le carbamide ;
- un polyphénol comprenant au moins 12 groupes hydroxyles aromatiques ;
- un solvant avec une constante diélectrique d'au moins 20 ; et
- une charge électroconductrice ;

dans laquelle le polymère linéaire n'est pas réticulé de manière covalente.

**2.** Composition selon la revendication 1, dans laquelle le polymère comprend de la fibroïne en formation de feuillet β et/ou de tour β, au moins sur 20 % de la longueur totale du polymère.

**3.** Composition selon l'une quelconque des revendications précédentes, dans laquelle la composition comprend au moins 10 % p/p de polyphénol non lié.

**4.** Composition selon l'une quelconque des revendications précédentes, dans laquelle le polymère a un poids moléculaire compris entre 10 et 1500 kDa.

**5.** Composition selon l'une quelconque des revendications précédentes, dans laquelle le polymère a entre 1 et 7 groupes accepteurs de liaison hydrogène et/ou entre 1 et 7 groupes donneurs de liaison hydrogène, par sous-unité répétée.

**6.** Composition selon l'une quelconque des revendications précédentes, dans laquelle le polyphénol a un poids moléculaire compris entre 500 et 4000 Da ; et/ou

dans laquelle le polyphénol comporte entre 2 et 40 fractions d'acide gallique, d'acide pyrogallique, d'alcool sinapoylique, d'alcool coniférylique ou d'alcool paracoumarylique ; et/ou
dans laquelle le polyphénol est extrait de sources naturelles, telles que le vin, le chêne, le thé, le raisin, les olives et/ou l'huile, telle que l'huile d'olive, de préférence dans laquelle le polyphénol est acide tannique.

**7.** Composition selon l'une quelconque des revendications précédentes, dans laquelle la composition comprend entre 10 et 60 % en poids du polymère ; et/ou

dans laquelle la composition comprend entre 30 et 70 % en poids du polyphénol ; et/ou
dans laquelle la composition comprend entre 10 et 90 % du solvant, tel que l'eau ; et/ou

dans laquelle la composition comprend entre 2 et 10 % en poids de la charge conductrice.

8. Composition selon l'une quelconque des revendications précédentes, dans laquelle le polymère est choisi dans la liste comportant la soie naturelle, la soie synthétique, la fibroïne, l'amidon, le dextrane, le chitosane, l'alcool polyvinylique, la pectine, le diacrylate de poly(éthylène glycol), le polyacrylamide, le polyéthylène glycol ou un mélange de ceux-ci, de préférence dans laquelle le polymère est la fibroïne de soie ; et/ou
dans laquelle la charge électroconductrice est choisie dans la liste comprenant le graphène, les polymères intrinsèquement conducteurs tels que la polyaniline, le polypyrrole, le poly(3,4-éthylènedioxythiophène) et/ou le polystyrène sulfonate, les ions fer, les carbures de métaux de transition 2D, les carbonitrures, les nitrures, les MXènes, les nanoargiles telles que la bentonite, la kaolinite, l'hectorite, l'halloysite et/ou la montmorillonite, et/ou les nanostructures de carbone allongées, telles que les nanotubes de carbone.

9. Composition selon l'une quelconque des revendications précédentes, dans laquelle la conductivité de la composition est comprise entre $1\times10^{-6}$ et $1\times10^{-1}$ S/cm.

10. Composition selon l'une quelconque des revendications précédentes, dans laquelle les rapports pondéraux entre le polymère, le polyphénol et la charge conductrice sont respectivement compris dans les intervalles 10-40:30-70:0,1-20.

11. Composition selon l'une quelconque des revendications précédentes, dans laquelle la composition comprend un sel, tel qu'un sel divalent, tel que choisi dans le groupe comportant le chlorure de calcium, le chlorure de magnésium et/ou le chlorure de lithium, et/ou tel que
dans laquelle la composition comprend entre 10 et 20 % du sel.

12. Composition selon la revendication 11, dans laquelle les rapports pondéraux entre le polymère, le polyphénol, la charge conductrice et le sel sont respectivement compris dans les intervalles 10-40:25-75:3-15:10-20.

13. Composition selon l'une quelconque des revendications précédentes, dans laquelle la composition est une composition auto-cicatrisante ; et/ou
dans laquelle la composition est biocompatible et/ou biodégradable.

14. Composition selon l'une quelconque des revendications précédentes, dans laquelle la viscosité à une vitesse de cisaillement de 1/s et une température de T = 50 °C est comprise entre 100 et 2000 Pa·s ; et/ou

dans laquelle le module de Young, à température ambiante, est inférieur à 40 kPa ; et/ou
dans laquelle la composition peut être étirée uniaxialement jusqu'à une longueur d'au moins 100 fois la longueur d'origine avant rupture, par exemple le long dudit axe, de préférence au moins 200 fois la longueur d'origine avant rupture ; et/ou
dans laquelle la composition a un allongement à la rupture d'au moins 10000 %.

15. Capteur de contrainte comprenant :

- la composition selon l'une quelconque des revendications 1 à 14 ;
- au moins deux contacts électriques ;
- une source d'énergie ; et
- un équipement de test électronique ;

dans lequel le capteur de contrainte est agencé de sorte qu'il forme au moins un circuit électrique configuré pour mesurer les changements dans une propriété électrique de la composition.

## (a) Control

## (b) SiGo-0%

## (c) SiGo-10%

10 μm

FIG. 1A

10 μm

FIG. 1B

10 μm

FIG. 1C

2          70          140          270          500

Extension (mm)

FIG. 2

FIG. 3

FIG. 4A

FIG. 4B

FIG 5A

FIG 5B

FIG. 6

FIG. 7

FIG. 8

31

FIG. 9

Separated                                              Healed

Healing →          120s →

FIG. 10A

5 mm          24 mm          51 mm          114 mm

FIG. 10B

FIG. 11

FIG. 12A

FIG. 12B

## (a) Moldable

FIG. 13A

## (b) Conformable

FIG. 13B

## (c) Printable

FIG. 13C

FIG. 14A

FIG. 14B

FIG. 14C

FIG. 15A

FIG. 15B

(a)

FIG. 16A

(b)

FIG. 16B

(a)

FIG. 17A

(b)

FIG. 17B

(c)

FIG. 17C

FIG. 18

FIG. 19

FIG. 20

FIG. 21

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110305339 A